# EUROPEAN PATENT APPLICATION

(11) **EP 4 679 606 A1**
(43) Date of publication of application: **14.01.2026**
(21) Application number: 24767260.3
(22) Date of filing: 08.03.2024
(51) Int. Cl.: H01M 50/358, H01G 11/12, H01G 11/14, H01G 11/78, H01M 50/209, H01M 50/291, H01M 50/342, H01M 50/35

(54) **POWER STORAGE DEVICE**

(30) Priority: 08.03.2023 JP 2023035321; 08.03.2023 JP 2023035322
(71) Applicant: GS Yuasa International Ltd., Kisshoin, Minami-ku, Kyoto-shi, Kyoto 601-8520 (JP)
(72) Inventor: NISHIMURA, Yosuke, Kyoto-shi, Kyoto 601-8520 (JP); YUASA, Eiji, Kyoto-shi, Kyoto 601-8520 (JP); KAWAKAMI, Takayuki, Kyoto-shi, Kyoto 601-8520 (JP); USHIJIMA, Osamu, Kyoto-shi, Kyoto 601-8520 (JP); TOMIMOTO, Kensuke, Kyoto-shi, Kyoto 601-8520 (JP)
(74) Representative: Grünecker Patent- und Rechtsanwälte PartG mbB
(86) International application number: PCT/JP2024/009159
(87) International publication number: WO 2024/185895

(57) **Abstract**

An energy storage apparatus according to the present embodiment includes a plurality of energy storage devices arranged in a first direction, the plurality of energy storage devices each including a gas release valve facing a second direction a pair of end members disposed on both sides of the plurality of energy storage devices in the first direction and a duct portion that overlaps the gas release valve in the second direction, and the duct portion includes a duct portion main body extending in the first direction a joint portion capable of releasing gas guided to one end of the duct portion main body in the first direction to an other member and an engaging portion that is disposed at the one end of the duct portion main body and engages with an end member.

## Description

### CROSS-REFERENCE TO RELATED APPLICATIONS

The present application claims the priority of Japanese Patent Application No. 2023-35321 and the priority of Japanese Patent Application No. 2023-35322, and the contents of Japanese Patent Application No. 2023-35321 and Japanese Patent Application No. 2023-35322 are incorporated herein by reference.

### TECHNICAL FIELD

The present invention relates to an energy storage apparatus including a plurality of energy storage devices.

### BACKGROUND ART

In the related art, a battery assembly including a duct is known (see Patent Document 1). Specifically, as illustrated in Fig. 35, a battery assembly 500 is configured to be accommodated in an insulating case in a state where a plurality of batteries 501 formed in a rectangular parallelepiped shape is arranged. The battery assembly 500 is formed into a rectangular parallelepiped shape as a whole.

In the battery 501, a positive pole 503 which is a positive electrode pole and a negative pole 504 which is a negative electrode pole protrude upward from one electrode surface 502. The electrode surface 502 of the battery 501 forms a part of an upper surface of the battery assembly 500 (an upper surface of the cell).

On the electrode surface 502 of the battery 501, a gas vent hole (pressure relief valve) (not illustrated) is provided at the center between the positive pole 503 and the negative pole 504. The gas vent hole is formed by opening the electrode surface 502 of the battery 501 and closing the opening portion with a thin metal film or the like. Accordingly, gas is generated inside the battery 501, and when the pressure inside the battery 501 increases to a predetermined value or more, the metal film breaks and the gas is ejected from the gas vent hole.

Two bus bar modules 505a and 505b are attached to the upper surface of the cells of the battery assembly 500 with their longitudinal directions facing the arrangement direction of the batteries 501. The bus bar modules 505a and 505b are formed to have a planar shape as a whole, and are provided on both sides of a duct 506 to interpose the duct 506 therebetween. These bus bar modules 505a and 505b are configured by at least holding a plurality of bus bars 507 on a resin plate 508.

The duct 506 is formed with a main body portion 506a having a transverse cross section formed in an approximately U-shape or C-shape, and flat flange portions 506b formed continuous to both ends of the main body portion 506a, and is provided across both longitudinal ends of the battery assembly 500.

The duct 506 is disposed such that the main body portion 506a faces all of the gas vent holes, in other words, the main body portion 506a covers all of the gas vent holes, and a rectangular columnar space is formed between the main body portion 506a and the upper surface of the cell through which gas ejected from the gas vent holes flows.

The duct 506 is held by the bus bar modules 505a and 505b with both flange portions 506b abutting (in close contact with) the upper surface of the cell of the battery assembly 500. That is, the duct 506 is held on the upper surface of the cell of the battery assembly 500 via the bus bar modules 505a and 505b.

When the duct 506 is attached to the battery assembly 500 and gas is ejected from the gas vent hole, the ejected gas flows through the space formed between the main body portion 506a of the duct 506 and the upper surface of the cell of the battery assembly 500, and is discharged from an outlet 506c. A cylindrical member such as a tube is usually connected to the outlet 506c of the duct 506, and the gas discharged from the duct 506 is guided to a predetermined position and discharged to the outside or the like.

In the related art, a battery pack including a duct portion is known (see Patent Document 2). Specifically, as illustrated in Figs. 36 and 37, a battery pack 700 at least includes a predetermined number of module cases 701, battery modules 702 accommodated in the module cases 701, and a bus bar case 704 supporting bus bars 703.

In the battery module 702, a plurality of battery cells 720 is disposed in a cell stacking direction, and all of the battery cells 720 configuring the battery module 702 are connected in series or parallel to be electrically connected.

The bus bar case 704 is a connecting case member attached to the module case 701 to cover the battery modules 702 together with the module case 701.

The plurality of battery cells 720 is also a single battery cell, and has an exterior case 721 that forms an outer shell such as an aluminum can, and has an electrode terminal 722a that is a positive terminal and an electrode terminal 722b that is a negative terminal, which are disposed on one end surface 721a of the exterior case 721 having a rectangular parallelepiped shape.

The exterior case 721 of the battery cell 720 is provided with a safety valve 723. The safety valve 723 is located between the electrode terminal 722a and the electrode terminal 722b, and is set to break when the internal pressure of the battery cell 720 becomes abnormal. The safety valve 723 is configured by attaching a thin metal film to a hole opened in the end surface 721a of the exterior case 721 of the battery cell 720 to close the hole. In this case, when the internal pressure of the battery cell 720 becomes abnormal, the metal film breaks and a hole in the exterior case 721 opens, allowing the gas inside the battery cell 720 to be released to the outside of the exterior case 721, thereby reducing the pressure inside the cell and preventing the battery cell 720 itself from rupturing.

The module case 701 is a deep box-shaped member capable of accommodating the entire battery cell 720 therein. The module case 701 has accommodation chambers for accommodating the battery cells 720, the number of which is the same as the number of the battery cells 720 to be accommodated. The module case 701 has an opening surrounded by four side plate portions at an upper end which is one end. In the opening, the electrode terminals 722a and 722b of the battery cell 720 placed in the accommodation chambers are disposed to be exposed.

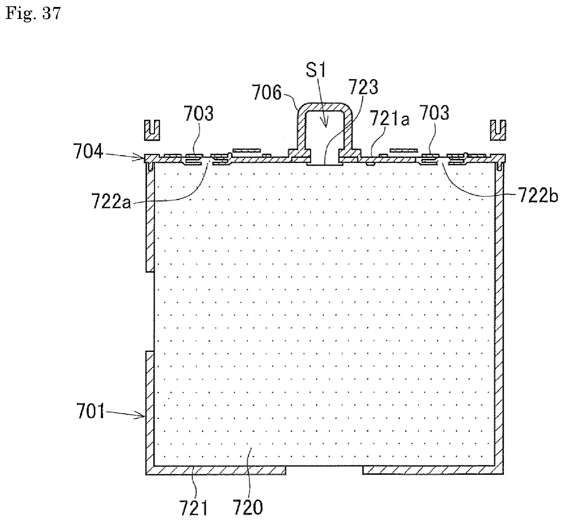

The bus bar case 704 has a duct portion 706 that forms a flue gas passage S1 for guiding gas ejected from the safety valve 723 to a predetermined location (see Fig. 37).

The duct portion 706 is pressed against the upper surface 721a of the battery cell 720 such that the portion where the safety valve 723 of the battery cell 720 is provided communicates with the internal flue gas passage S1, and the flue gas passage S1 is blocked off from the outside by the seal structure. The duct portion 706 extends along the cell stacking direction over the entire length of the bus bar case 704 in the cell stacking direction.

### PRIOR ART DOCUMENTS

### PATENT DOCUMENTS

Patent Document 1: JP-A-2014-186973
Patent Document 2: JP-A-2018-73551

### SUMMARY OF THE INVENTION

### PROBLEMS TO BE SOLVED BY THE INVENTION

In Patent Document 1, at the time of using the battery assembly 500 having the duct 506 attached thereto, when the battery assembly 500 is mounted on a vehicle or the like, the bus bar modules 505a and 505b may shift relative to (that is, move relative to) the battery assembly 500 fixed to the vehicle or the like due to vibrations of the vehicle or the like.

In this case, since the duct 506 is attached to the battery assembly 500 via the bus bar modules 505a and 505b, the duct 506 also moves relative to the battery assembly 500. Accordingly, stress or the like is likely to occur at a connection portion between the duct and the cylindrical member (member that guides gas to a predetermined position) connected to the outlet 506c of the duct 506, and as a result, gas leakage is likely to occur at the connection portion.

An object of the present embodiment is to provide an energy storage apparatus in which a joint portion of a duct portion is less likely to move relative to a member connected to the joint portion when the energy storage apparatus is in use.

### MEANS FOR SOLVING THE PROBLEMS

According to the present embodiment, there is provided an energy storage apparatus including:
a plurality of energy storage devices arranged in a first direction, the plurality of energy storage devices each including a gas release valve disposed facing a second direction perpendicular to the first direction;
a pair of end members disposed on both sides of the plurality of energy storage devices in the first direction; and
a duct portion that overlaps the gas release valve in the second direction, in which
the duct portion includes:
   a duct portion main body that extends in the first direction and guides gas discharged from the gas release valve in the first direction;
   a joint portion that is disposed at one end of the duct portion main body in the first direction and to which an other member is connected and capable of releasing the gas guided to the one end to the other member; and
   an engaging portion that is disposed at the one end of the duct portion main body and engages with an end member of the pair of end members on one side in the first direction.

According to another embodiment, there is provided an energy storage apparatus including:
a plurality of energy storage devices arranged in a first direction, the plurality of energy storage devices each including a gas release valve disposed facing a second direction perpendicular to the first direction;
a plurality of adjacent members disposed between adjacent energy storage devices in the first direction, or disposed adjacent to an endmost energy storage device among the plurality of energy storage devices in the first direction on an outer side of the endmost energy storage device; and
a duct portion that overlaps the gas release valve in the second direction, in which
a first adjacent member which is at least one adjacent member among the plurality of adjacent members includes:
   a first main body portion that overlaps at least of an energy storage device of the adjacent energy storage devices or the end most energy storage device when viewed in the first direction; and
   a pair of guide portions that extends from the first main body portion in the second direction, the pair of guide portions extending along the duct portion on both sides of the duct portion in a third direction perpendicular to each of the first direction and the second direction.

According to still another embodiment, there is provided an energy storage apparatus including:
a plurality of energy storage devices arranged in a first direction, the plurality of energy storage devices each including a gas release valve disposed facing a second direction perpendicular to the first direction;
a plurality of adjacent members disposed between adjacent energy storage devices in the first direction, or disposed adjacent to an endmost energy storage device among the plurality of energy storage devices in the first direction on an outer side of the endmost energy storage device; and
a duct portion that overlaps the gas release valve in the second direction, in which
a first adjacent member which is at least one adjacent member among the plurality of adjacent members includes:
   a first main body portion that overlaps at least of an energy storage device of the adjacent energy storage devices or the end most energy storage device when viewed in the first direction; and
   a pair of guide portions that extends from the first main body portion in the second direction, the pair of guide portions extending along the duct portion on both sides of the duct portion in a third direction perpendicular to each of the first direction and the second direction,
a second adjacent member which is different from the first adjacent member among the plurality of adjacent members includes:
   a second main body portion that overlaps the energy storage device when viewed in the first direction; and
   a locking piece that extends from the second main body portion, the locking piece extending in the same direction as the pair of guide portions at a position adjacent to the duct portion in the third direction and locking the duct portion, and
the pair of guide portions are longer in the second direction than the locking piece of the second adjacent member.

### BRIEF DESCRIPTION OF THE DRAWINGS

Fig. 1 is a perspective view of an energy storage apparatus according to a first embodiment.
Fig. 2 is an exploded perspective view of the energy storage apparatus.
Fig. 3 is a perspective view of an apparatus main body with a duct portion attached.
Fig. 4 is a view of the apparatus main body with the duct portion attached as viewed from one side in a Z-axis direction.
Fig. 5 is an exploded perspective view of the apparatus main body.
Fig. 6 is a perspective view of a first intermediate adjacent member provided in the apparatus main body.
Fig. 7 is a perspective view of a second intermediate adjacent member provided in the apparatus main body.
Fig. 8 is a perspective view of an end adjacent member provided in the apparatus main body.
Fig. 9 is a view of the end adjacent member as viewed from an X-axis direction.
Fig. 10 is an enlarged view of an engaged portion and its vicinity in a cross section taken along line X-X in Fig. 9.
Fig. 11 is a view of the duct portion as viewed from a Y-axis direction.
Fig. 12 is a view of the duct portion as viewed from the other side in the Z-axis direction.
Fig. 13 is an enlarged view of an upper portion in a cross section taken along line XIII-XIII in Fig. 4.
Fig. 14 is a view for describing movement of the duct portion when the duct portion is attached to the apparatus main body.
Fig. 15 is an enlarged view of an engaged portion of an end adjacent member and its vicinity in a vertical central cross section of the apparatus main body when the duct portion is in a first posture.
Fig. 16 is an enlarged view of the engaged portion of the end adjacent member and its vicinity in a cross section taken along line XIII-XIII in Fig. 4 of the apparatus main body when the duct portion is in the first posture.
Fig. 17 is an enlarged view of the engaged portion of the end adjacent member and its vicinity in a vertical central cross-sectional view of the apparatus main body when the duct portion is in a fifth posture.
Fig. 18 is a perspective view of an energy storage apparatus according to a second embodiment.
Fig. 19 is an exploded perspective view of the energy storage apparatus.
Fig. 20 is a perspective view of an apparatus main body with a duct portion attached.
Fig. 21 is a view of the apparatus main body with the duct portion attached as viewed from one side in a Z-axis direction.
Fig. 22 is an exploded perspective view of the apparatus main body.
Fig. 23 is a perspective view of a first intermediate adjacent member provided in the apparatus main body.
Fig. 24 is a perspective view of a second intermediate adjacent member provided in the apparatus main body.
Fig. 25 is a perspective view of an end adjacent member provided in the apparatus main body.
Fig. 26 is an enlarged perspective view of a range indicated by XXVI in Fig. 20 as viewed from a different angle.
Fig. 27 is an enlarged view of a range indicated by XXVII in Fig. 20.
Fig. 28 is an enlarged view of an upper portion in a cross section taken along line XXVIII-XXVIII in Fig. 21.
Fig. 29 is a view of the duct portion as viewed from the Y-axis direction.
Fig. 30 is a view of the duct portion as viewed from the other side in the Z-axis direction.
Fig. 31 is a view illustrating a state where an end portion on one side of the duct portion is pushed between a pair of guide portions of an end adjacent member.
Fig. 32 is a view for describing a guide portion according to another embodiment.
Fig. 33 is an enlarged view of an engaged portion of an end adjacent member and its vicinity in a vertical central cross section of an energy storage apparatus according to another embodiment.
Fig. 34 is an enlarged perspective view of an engaged portion of an end adjacent member of the energy storage apparatus according to another embodiment and its vicinity.

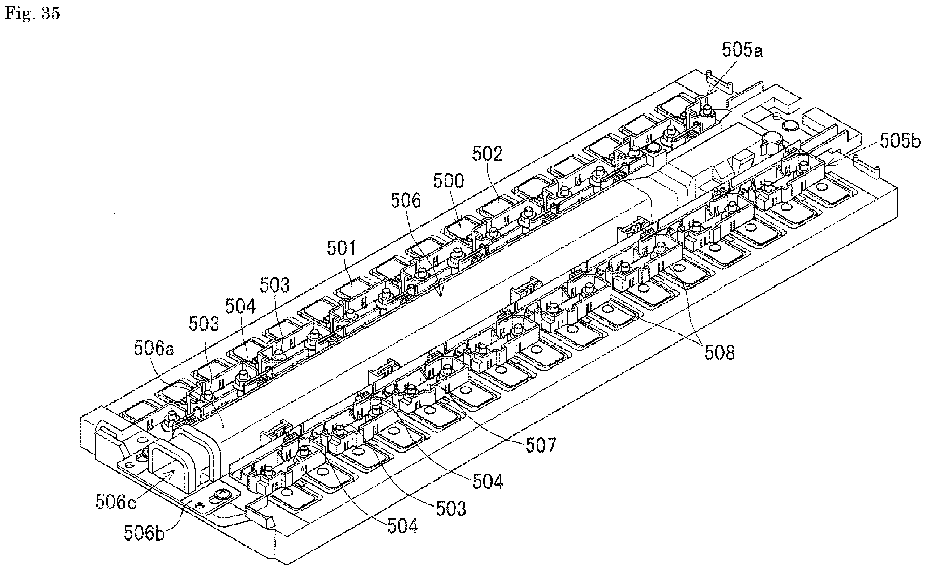

Fig. 35 is a perspective view illustrating a duct holding structure for a battery assembly in the related art.

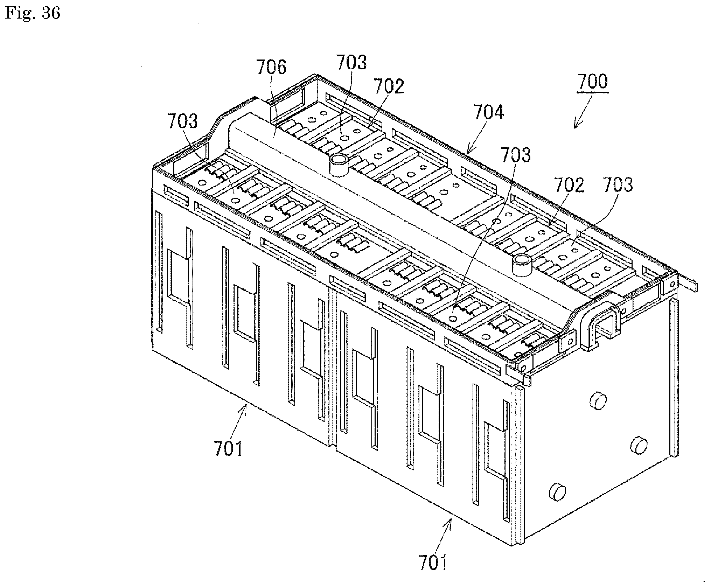

Fig. 36 is a perspective view of a battery module in the related art.
Fig. 37 is a vertical end view of the battery module.

### MODE FOR CARRYING OUT THE INVENTION

(1) An energy storage apparatus according to an embodiment of the present invention includes:
   a plurality of energy storage devices arranged in a first direction, the plurality of energy storage devices each including a gas release valve disposed facing a second direction perpendicular to the first direction;
   a pair of end members disposed on both sides of the plurality of energy storage devices in the first direction; and
   a duct portion that overlaps the gas release valve in the second direction, in which
   the duct portion includes:
      a duct portion main body that extends in the first direction and guides gas discharged from the gas release valve in the first direction;
      a joint portion that is disposed at one end of the duct portion main body in the first direction and to which an other member is connected and capable of releasing the gas guided to the one end to the other member; and
      an engaging portion that is disposed at the one end of the duct portion main body and engages with an end member of the pair of end members on one side in the first direction.

As in the energy storage apparatus according to one embodiment of the present invention, since the engaging portion disposed at one end of the duct portion main body together with the joint portion engages with the end member, movement of the joint portion relative to the end member is suppressed when a force is applied to the duct portion due to vibrations applied to the energy storage apparatus or pressure when gas is released from the gas release valve of the energy storage device, or the like. Therefore, movement (relative movement) of the joint portion relative to the other member is suppressed.

(2) In the energy storage apparatus according to (1),
the end member on the one side may include an engaged portion that engages with the engaging portion at an end portion in a direction toward the gas release valve in the second direction,
the engaging portion may extend from the one end of the duct portion main body in the first direction, and
the engaged portion may include:
   a first portion that faces the engaging portion from an opposite side with respect to the plurality of energy storage devices in the second direction and extends in a planar direction perpendicular to the second direction; and
   a second portion that protrudes from an edge of the first portion in a direction away from the plurality of energy storage devices in the second direction and extends along the edge of the first portion.

In the energy storage apparatus described in (2) above, since the strength of the first portion is improved by the second portion, the first portion is less likely to deform when the duct portion (more specifically, the one end) attempts to move in the second direction away from the plurality of energy storage devices (the end member on one side), thereby more effectively suppressing the movement of the duct portion.

In the battery pack 700 disclosed in Patent Document 2, when attaching the duct portion 706 to the bus bar case 704, the duct portion 706 is positioned in the bus bar case 704 such that the safety valve 723 of the battery cell 720 and the flue gas passage S1 face each other, and then the duct portion 706 is fixed to be pressed against the upper surface 721a of the battery cell 720, making the attachment process complicated.

An object of another embodiment of the present invention is to provide an energy storage apparatus in which the duct portion can be easily assembled.

(3) An energy storage apparatus according to another embodiment of the present invention includes:
a plurality of energy storage devices arranged in a first direction, the plurality of energy storage devices each including a gas release valve disposed facing a second direction perpendicular to the first direction;
a plurality of adjacent members disposed between adjacent energy storage devices in the first direction, or disposed adjacent to an endmost energy storage device among the plurality of energy storage devices in the first direction on an outer side of the endmost energy storage device; and
a duct portion that overlaps the gas release valve in the second direction, in which
a first adjacent member which is at least one adjacent member among the plurality of adjacent members includes:
   a first main body portion that overlaps at least of an energy storage device of the adjacent energy storage devices or the end most energy storage device when viewed in the first direction; and
   a pair of guide portions that extends from the first main body portion in the second direction, the pair of guide portions extending along the duct portion on both sides of the duct portion in a third direction perpendicular to each of the first direction and the second direction.

With the energy storage apparatus according to another embodiment of the present invention, when the duct portion is pushed between the pair of guide portions, the duct portion is guided along the pair of guide portions.

(4) An energy storage apparatus according to still another embodiment of the present invention includes:
a plurality of energy storage devices arranged in a first direction, the plurality of energy storage devices each including a gas release valve disposed facing a second direction perpendicular to the first direction;
a plurality of adjacent members disposed between adjacent energy storage devices in the first direction, or disposed adjacent to an endmost energy storage device among the plurality of energy storage devices in the first direction on an outer side of the endmost energy storage device; and
a duct portion that overlaps the gas release valve in the second direction, in which
a first adjacent member which is at least one adjacent member among the plurality of adjacent members includes:
   a first main body portion that overlaps at least of an energy storage device of the adjacent energy storage devices or the end most energy storage device when viewed in the first direction; and
   a pair of guide portions that extend from the first main body portion in the second direction, the pair of guide portions extending along the duct portion on both sides of the duct portion in a third direction perpendicular to each of the first direction and the second direction,
a second adjacent member which is different from the first adjacent member among the plurality of adjacent members includes:
   a second main body portion that overlaps at least of an energy storage device of the adjacent energy storage devices or the end most energy storage device when viewed in the first direction; and
   a locking piece that extends from the second main body portion, the locking piece extending in the same direction as the pair of guide portions at a position adjacent to the duct portion in the third direction and locking the duct portion, and
the pair of guide portions are longer in the second direction than the locking piece of the second adjacent member.

With the energy storage apparatus according to still another embodiment of the present invention, by pushing the duct portion between the pair of guide portions, the duct portion is guided by the pair of guide portions to an arrangement position (a position where the duct portion is locked to the locking piece of the second adjacent member), making it easier to assemble the duct portion.

(5) In the energy storage apparatus according to (4),
a bending rigidity of the guide portion is greater than a bending rigidity of the locking piece.

As in the energy storage apparatus described in (5) above, by ensuring the bending rigidity of the guide portion, the guide portion is less likely to bend when the duct portion is pushed between the pair of guide portions, and accordingly, the guide portion is more accurately guided to the locking position with the locking piece.

(6) In the energy storage apparatus according to (4) or (5),
the first adjacent member may be disposed outside the endmost energy storage device among the plurality of energy storage devices in the first direction.

As in the energy storage apparatus described in (6) above, since the first adjacent member is located outside the plurality of energy storage devices in the first direction, when the duct portion is pushed between the pair of guide portions, the end portion of the duct portion in the first direction is guided to the arrangement position (that is, the end position of the duct portion is accurately positioned), thereby making it easier to assemble the duct portion.

(7) In the energy storage apparatus according to (1),
the duct portion may include:
   a first member on a side of the plurality of energy storage devices in the second direction; and
   a second member on an opposite side with regard to the plurality of energy storage devices in the second direction,
the first member may include a first engaging portion disposed at the one end of the duct portion in the first direction, and
the end member of the pair of end members that engages with the first engaging portion may include a first engaged portion that engages with the first engaging portion.

As in the energy storage apparatus described in (7) above, even if the duct portion includes two members, since the first engaging portion disposed at one end of the first member together with the joint portion engages with the end member, movement of the joint portion relative to the end member is suppressed when a force is applied to the duct portion including the first member due to vibrations applied to the energy storage apparatus or pressure when gas is released from the gas release valve of the energy storage device, or the like.

(8) In the energy storage apparatus according to (1),
the duct portion may include:
   a first member on a side of the plurality of energy storage devices in the second direction; and
   a second member on an opposite side with regard to the plurality of energy storage devices in the second direction,
the second member may include a second engaging portion disposed at one end of the duct portion in the first direction, and
the end member of the pair of end members that engages with the second engaging portion may include a second engaged portion that engages with the second engaging portion.

According to the energy storage apparatus described in (8) above, since the second engaging portion disposed at one end of the second member engages with the end member, movement of the joint portion relative to the end member is suppressed even if a force is applied to the duct portion including the second member due to pressure when gas is released from the gas release valve of the energy storage device, or the like.

(9) In the energy storage apparatus according to (1),
the duct portion may include:
   a first member on a side of the plurality of energy storage devices in the second direction; and
   a second member on an opposite side with regard to the plurality of energy storage devices in the second direction,
the first member may include a first engaging portion disposed at the one end of the duct portion in the first direction,
the second member may include a second engaging portion disposed at the one end of the duct portion in the first direction, and
the end member of the pair of end members that engages with the first engaging portion and the second engaging portion may include a first engaged portion that engages with the first engaging portion and a second engaged portion that engages with the second engaging portion.

According to the energy storage apparatus described in (9) above, since the two engaging portions (the first engaging portion and the second engaging portion) of the duct portion are engaged with the end member, movement of the joint portion relative to the end member is more effectively suppressed. Furthermore, since the first member and the second member arranged in the second direction are both engaged with the end member, eparation (peeling or the like) of the first member and the second member is preferably suppressed even if a force that separates the first member and the second member is applied to the duct portion.

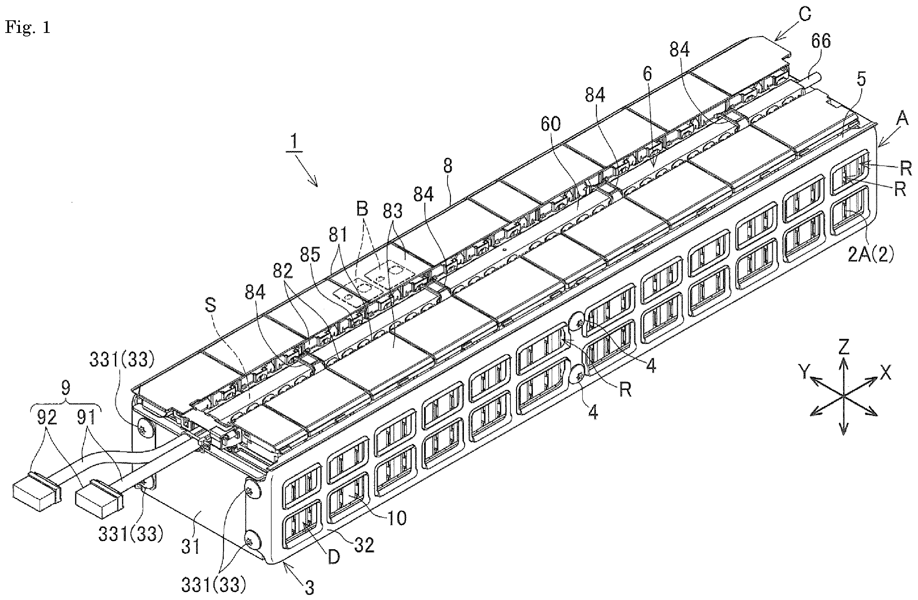

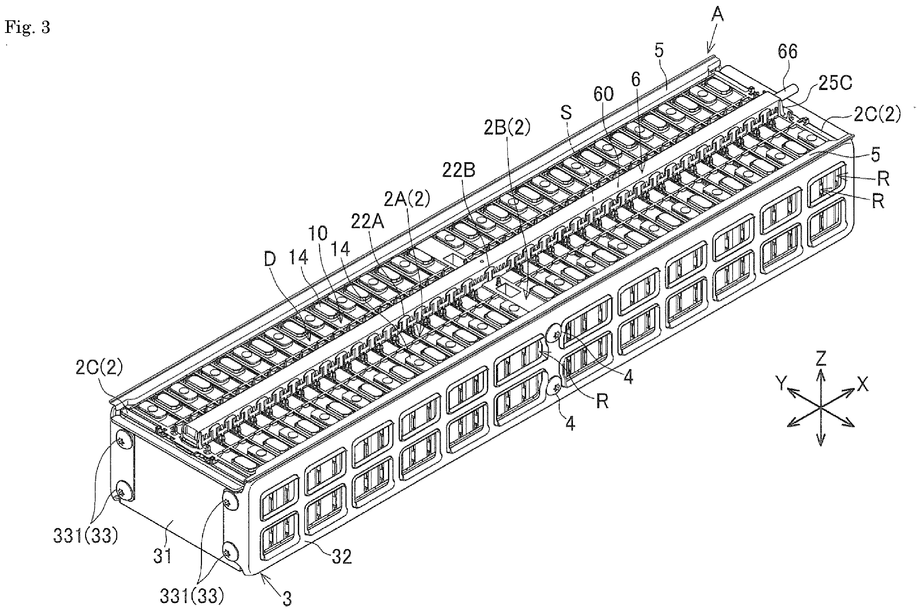

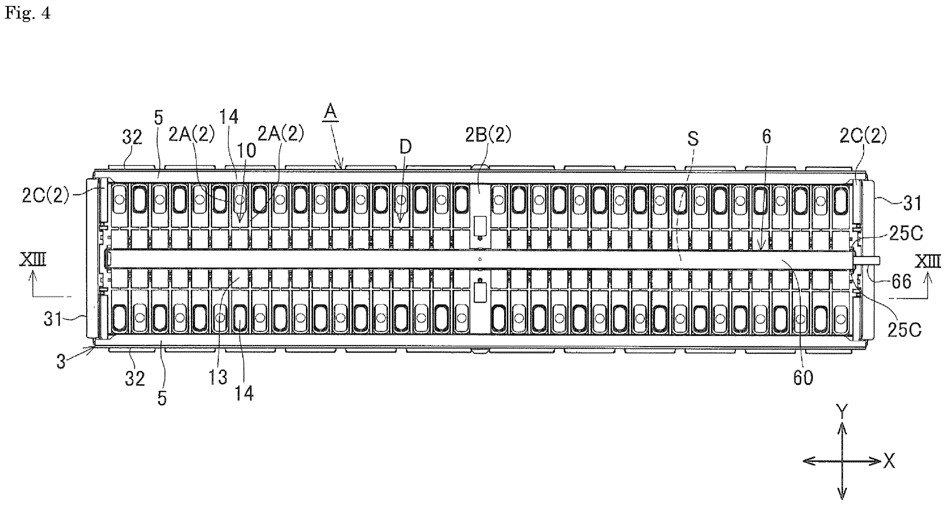

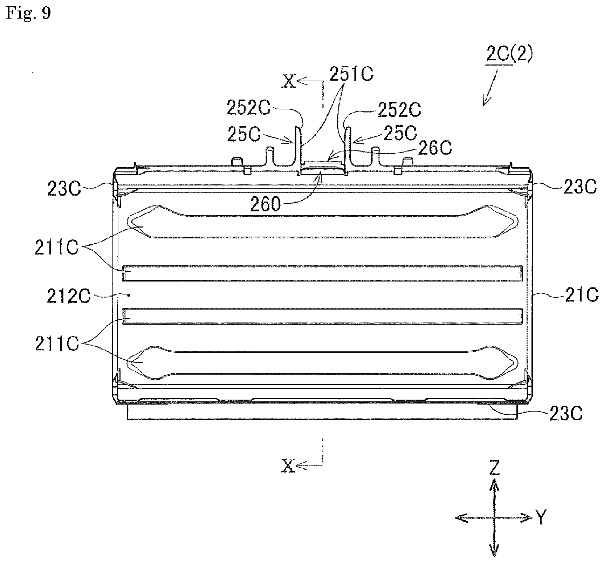

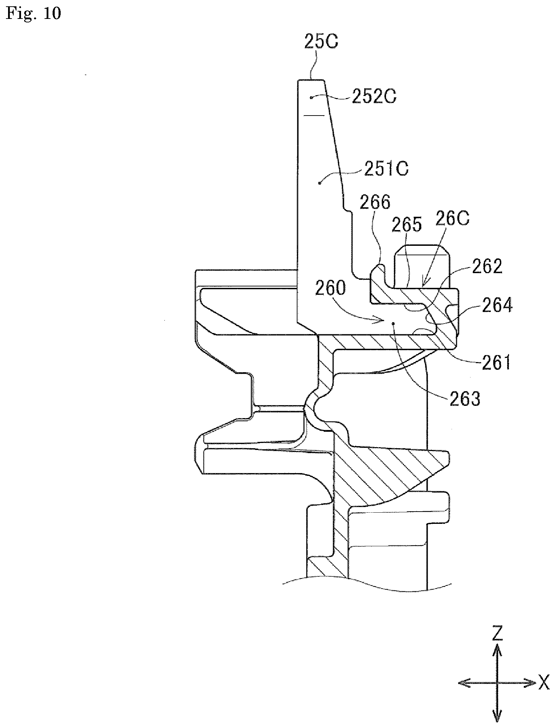

Hereinafter, the present embodiment of the present invention (hereinafter referred to as a first embodiment) will be described with reference to Figs. 1 to 17. The names of the components (constituent elements) in the present embodiment are those in the present embodiment and may differ from the names of the components (constituent elements) in the background art.

As illustrated in Figs. 1 to 5, an energy storage apparatus 1 includes a plurality of energy storage devices 10 each including a gas release valve 132, a pair of end adjacent members (end members) 2C disposed on both sides of the plurality of energy storage devices 10, and a duct portion 6 that overlaps the gas release valve 132 of the energy storage device 10. The duct portion 6 engages with one of the pair of end adjacent members 2C.

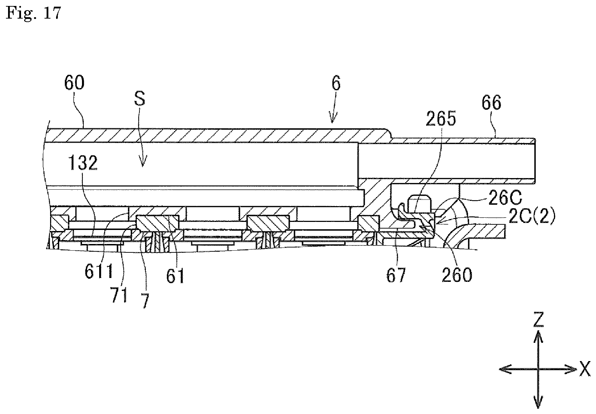

In the energy storage apparatus 1 of the present embodiment, the plurality of energy storage devices 10 is arranged in a first direction, and the pair of end adjacent members 2C are disposed on either side of the plurality of energy storage devices 10 in the first direction. The plurality of energy storage devices 10 is disposed with the gas release valves 132 facing a second direction perpendicular to the first direction, and the duct portion 6 extends in the first direction and is disposed to overlap the gas release valves 132 of the energy storage devices 10 in the second direction. The duct portion 6 has one end in the first direction (engaging end) engaged with the end adjacent member 2C (see Fig. 17).

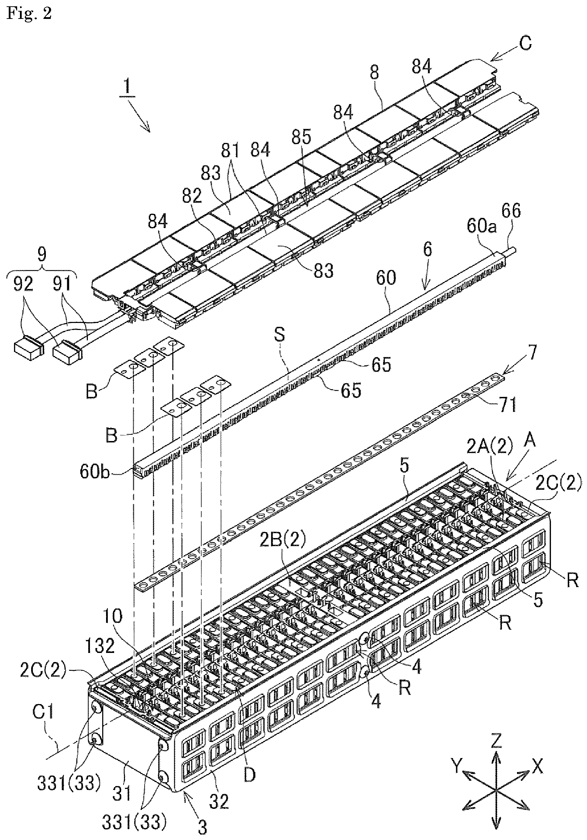

Specifically, the energy storage apparatus 1 includes an apparatus main body A including a plurality of energy storage devices 10, a duct portion 6 attached to the apparatus main body A, and a plate portion C overlapped on the portion of the apparatus main body A where the duct portion 6 is attached. The energy storage apparatus 1 of the present embodiment includes a seal portion 7 disposed between the apparatus main body A and the duct portion 6 (see Fig. 2). In the following, the predetermined direction in which the energy storage devices 10 are arranged is referred to as an X-axis direction (first direction) of the Cartesian coordinate system, the direction in which the apparatus main body A and the plate portion C are arranged is referred to as a Z-axis direction (second direction) of the Cartesian coordinate system, and the direction perpendicular to both the X-axis direction and the Z-axis direction is referred to as a Y-axis direction (third direction) of the Cartesian coordinate system.

The apparatus main body A includes a layered product D having a plurality of energy storage devices 10 and a plurality of adjacent members 2, in which the energy storage devices 10 and the adjacent members 2 are arranged alternately in the X-axis direction, and a holding portion 3 that holds the layered product D. The apparatus main body A includes a first fixing portion 4 that fixes the adjacent member 2 to the holding portion 3, and an insulator 5 that provides insulation between the layered product D and the holding portion 3.

The plurality of energy storage devices 10 is a primary battery, a secondary battery, a capacitor, or the like. The energy storage device 10 of the present embodiment is a chargeable and dischargeable nonaqueous electrolyte secondary battery. More specifically, the energy storage device 10 is a lithium ion secondary battery that utilizes the electron transfer that occurs with the transfer of lithium ions.

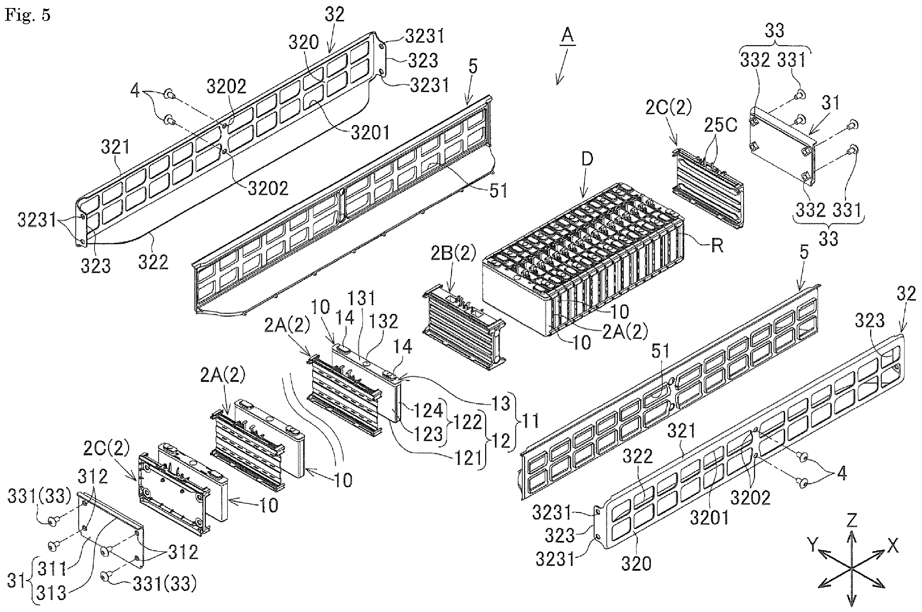

Specifically, the energy storage device 10 includes an electrode assembly, a case 11 that accommodates the electrode assembly together with an electrolyte solution, a terminal 14 that is partially exposed to the outside of the case 11, and a current collector that connects the electrode assembly and the terminal 14 (see Fig. 5). The energy storage device 10 of the present embodiment includes a pair of terminals 14, which are disposed at an end portion on one side of the energy storage device 10 in the Z-axis direction (the upper side in Fig. 5) and spaced apart in the Y-axis direction.

In the electrode assembly, positive electrode plates and negative electrode plates are alternately stacked with separators interposed therebetween. In the electrode assembly, lithium ions move between the positive electrode plate and the negative electrode plate, thereby charging and discharging the energy storage device 10.

The case 11 includes a case body 12 having an opening at end portion on one side in the Z-axis direction, and a plate-shaped lid plate 13 that closes the opening of the case body 12. The case body 12 has a rectangular cylindrical shape (that is, a bottomed rectangular cylindrical shape) with a closed end portion on the other side in the Z-axis direction (the lower side in Fig. 5), and the case 11 has a rectangular parallelepiped shape (six-sided shape).

Specifically, the case body 12 includes a plate-shaped closing portion 121 and a cylindrical body portion (peripheral wall) 122 extending from the peripheral edge of the closing portion 121 in the Z-axis direction.

The closing portion 121 is a portion that is located at the lower end of the case body 12 when the case body 12 is placed with the opening facing upwards (that is, it becomes the bottom wall of the case body 12 when the opening faces upwards). The closing portion 121 has a rectangular shape when viewed in the Z-axis direction.

The body portion 122 has a rectangular cylindrical shape, more specifically, a flattened rectangular cylindrical shape. The body portion 122 includes a pair of long wall portions 123 extending from the long sides at the peripheral edge of the closing portion 121, and a pair of short wall portions 124 extending from the short sides at the peripheral edge of the closing portion 121. In the body portion 122, the short wall portion 124 connects the end portions of the pair of long wall portions 123 facing each other in the X-axis direction, thereby forming the body portion 122 in a rectangular cylindrical shape.

The lid plate 13 is a plate-shaped member that closes the opening of the case body 12. The lid plate 13 includes a lid plate main body 131 having a rectangular plate shape that is elongated in the Y-axis direction, and a gas release valve 132 disposed on the lid plate main body 131.

The gas release valve 132 discharges gas to the outside when gas is generated within the case 11 and the pressure within the case 11 exceeds a predetermined value. The gas release valve 132 of the present embodiment is disposed at the center of the lid plate main body 131 in the Y-axis direction. The gas release valve 132 of the present embodiment is circular when viewed in the Z-axis direction.

The lid plate 13 configured as described above is joined to the case body 12 with the peripheral edge portion of the lid plate 13 overlapping the peripheral edge portion of the opening of the case body 12, thereby forming the case 11.

The pair of terminals 14 are portions that are electrically connected to terminals 14 of other energy storage devices 10 or to an external device or the like. The terminal 14 is formed of a member having conductivity. The terminal 14 is formed of a metal material having high weldability, such as an aluminum-based metal material, such as aluminum or an aluminum alloy, or a copper-based metal material, such as copper or a copper alloy.

The pair of terminals 14 are disposed on both end portions of the lid plate 13 in the Y-axis direction. That is, the pair of terminals 14 are disposed on the lid plate 13 with the gas release valve 132 interposed therebetween.

The energy storage devices 10 described above have a flattened rectangular parallelepiped shape, and the plurality of energy storage devices 10 is arranged in the X-axis direction with the wide faces (long wall portions 123) of the cases 11 facing each other with adjacent members 2 interposed therebetween. At this time, the gas release valves 132 of the energy storage devices 10 are arranged in a row in the X-axis direction. One terminal 14 and the other terminal 14 of the energy storage device 10 are arranged in the X-axis direction with the gas release valve 132 interposed therebetween.

The plurality of adjacent members 2 has insulating properties and is disposed between the energy storage devices 10 arranged in the X-axis direction, or between the energy storage device 10 and a member (in the example of the present embodiment, the terminal portion 31, which is a part of the holding portion 3) arranged in the X-axis direction relative to the energy storage device 10. The adjacent member 2 of the present embodiment is formed of a resin having insulating properties. The adjacent member 2 forms a flow path R between the adjacent energy storage device 10 and the adjacent member 2, through which a temperature adjusting fluid (gas such as air in the example of the present embodiment) can flow. The plurality of adjacent members 2 includes a plurality of types of adjacent members 2A, 2B, and 2C.

Specifically, the plurality of adjacent members 2 includes a first intermediate adjacent member 2A disposed between two adjacent energy storage devices 10, a second intermediate adjacent member 2B disposed between two adjacent energy storage devices 10 and fixed to the holding portion 3, and an end adjacent member (end member) 2C adjacent to an endmost energy storage device 10 in the X-axis direction between the holding portion 3 and the endmost energy storage device 10. That is, the energy storage apparatus 1 includes, as the adjacent members 2, a first intermediate adjacent member 2A, a second intermediate adjacent member 2B, and an end adjacent member 2C.

The energy storage apparatus 1 of the present embodiment includes a plurality of first intermediate adjacent members 2A, one second intermediate adjacent member 2B, and two (a pair) end adjacent members 2C, and the plurality of first intermediate adjacent members 2A is disposed between the energy storage devices 10 except between the energy storage devices 10 between which the second intermediate adjacent member 2B is disposed. In the energy storage apparatus 1 of the present embodiment, one of the two end adjacent members 2C is an end member that engages with the engaging end of the duct portion 6.

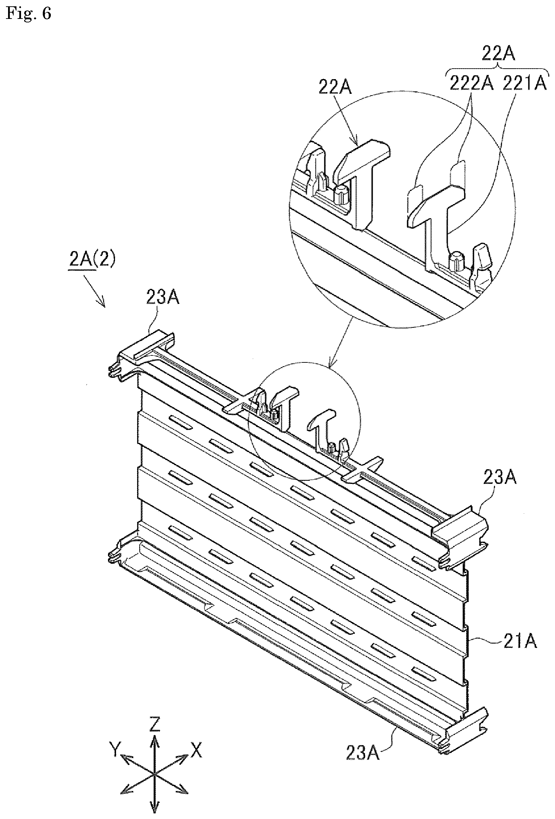

As also illustrated in Fig. 6, the plurality of first intermediate adjacent members 2A includes a first intermediate main body portion 21A located between the energy storage devices 10, and a first intermediate locking piece 22A that locks the duct portion 6 to the first intermediate main body portion 21A. In the present embodiment, locking means that two portions abut (contact) with each other, so that one portion suppresses the movement of the other. For example, the first locking piece 22A is fixed to the duct portion 6 by abutting to engage with a locked portion 65 of the duct portion 6 by hooking or the like.

Specifically, the first intermediate adjacent member 2A includes a first intermediate main body portion 21A that extends in a planar direction perpendicular to the X-axis direction between adjacent energy storage devices 10 in the X-axis direction, and a first intermediate locking piece 22A that extends (protrudes) from the first intermediate main body portion 21A toward one side in the Z-axis direction and locks the duct portion 6 to the first intermediate main body portion 21A. The first intermediate adjacent member 2A includes a first intermediate restricting portion 23A that restricts movement of the energy storage device 10 adjacent to the first intermediate main body portion 21A relative to the first intermediate main body portion 21A.

The first intermediate main body portion 21A is a portion that faces the long wall portion 123 of the case 11 of the energy storage device 10 in a state of partial abutment therewith. The first intermediate main body portion 21A cooperates with an adjacent energy storage device 10 to form a flow path R between the energy storage device 10 and the first intermediate main body portion 21A, through which a temperature adjusting fluid can flow. In the present embodiment, the first intermediate main body portion 21A has a rectangular plate shape with a size corresponding to the energy storage device 10 when viewed in the X-axis direction, and its cross-sectional shape along an X-Z plane (a plane including the X-axis direction and the Z-axis direction) is a rectangular waveform.

The two first intermediate locking pieces 22A extend from positions spaced apart in the Y-axis direction at end portion on one side of the first intermediate main body portion 21A in the Z-axis direction. The interval between these two first intermediate locking pieces 22A in the Y-axis direction corresponds to the dimension of the duct portion 6 in the Y-axis direction and the dimension of the seal portion 7 in the Y-axis direction. Accordingly, the first intermediate locking piece 22A extends along the duct portion 6 to one side in the Z-axis direction. The two first intermediate locking pieces 22A are plate-shaped with the Y-axis direction as the thickness direction (in other words, plate-shaped along the X-Z plane).

Specifically, the two first intermediate locking pieces 22A each include a locking piece main body 221A extending from the first intermediate main body portion 21A along the duct portion 6 in the Z-axis direction (the opposing direction between the gas release valve 132 and the duct portion 6), and a locking portion 222A that engages with the duct portion 6 (more specifically, a duct portion main body 60 to be described later).

The locking piece main body 221A is a strip-shaped portion extending straight in the Z-axis direction from the first intermediate main body portion 21A. The locking piece main body 221A of the present embodiment is in the form of a strip having a constant dimension in the X-axis direction at a position in the Z-axis direction.

The locking portion 222A is a portion of the locking piece main body 221A that extends in the X-axis direction (the extending direction of the duct portion 6) from a position spaced apart on one side in the Z-axis direction from the first intermediate main body portion 21A. The locking portion 222A of the present embodiment extends from the locking piece main body 221A to one side and the other side in the X-axis direction. That is, the first intermediate locking piece 22A includes two locking portions 222A.

The first intermediate restricting portion 23A extends in the X-axis direction from a corner portion of the rectangular first intermediate main body portion 21A and abuts the energy storage device 10 (more specifically, the case 11) adjacent to the first intermediate main body portion 21A from the outside in a Y-Z plane direction, thereby restricting the relative movement of the energy storage device 10 in the Y-Z plane direction with respect to the first intermediate main body portion 21A. The first intermediate restricting portion 23A of the present embodiment extends from the first intermediate main body portion 21A toward one side and the other side in the X-axis direction.

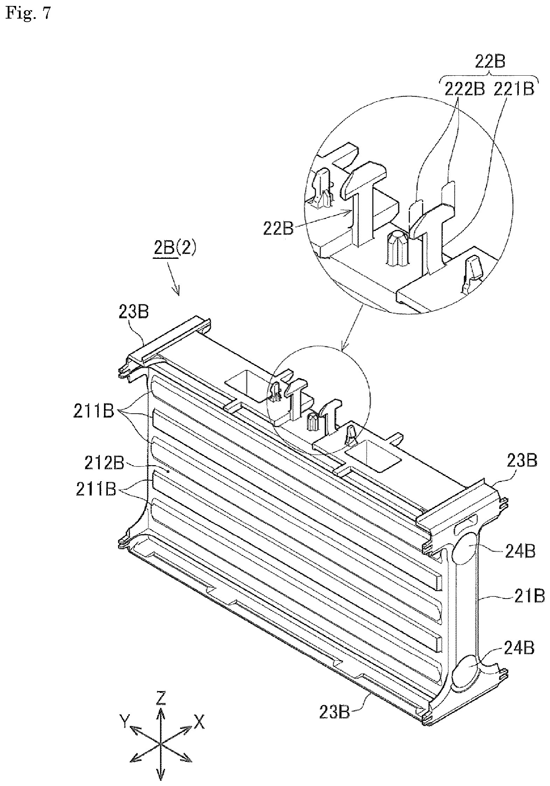

As also illustrated in Fig. 7, the second intermediate adjacent member 2B includes a second intermediate main body portion 21B located between the energy storage devices 10, and a second intermediate locking piece 22B that locks the duct portion 6 to the second intermediate main body portion 21B.

Specifically, the second intermediate adjacent member 2B includes a second intermediate main body portion 21B that extends in a planar direction perpendicular to the X-axis direction between adjacent energy storage devices 10 in the X-axis direction, and a second intermediate locking piece 22B that extends (protrudes) from the second intermediate main body portion 21B toward one side in the Z-axis direction and locks the duct portion 6 to the second intermediate main body portion 21B. The second intermediate adjacent member 2B includes a second intermediate restricting portion 23B that restricts the movement of the energy storage device 10 adjacent to the second intermediate main body portion 21B relative to the second intermediate main body portion 21B, and a second fixing portion 24B used to fix the second intermediate adjacent member 2B to the holding portion 3.

The second intermediate main body portion 21B is a portion that faces the long wall portion 123 of the case 11 of the energy storage device 10 in a state of partial abutment therewith. The second intermediate main body portion 21B cooperates with an adjacent energy storage device 10 to form a flow path R between the energy storage device 10 and the second intermediate main body portion 21B, through which a temperature adjusting fluid can flow. In the present embodiment, the dimension of the second intermediate main body portion 21B in the X-axis direction is larger than the dimension of the first intermediate main body portion 21A in the X-axis direction (that is, it is thick). The second intermediate main body portion 21B has a rectangular plate shape with a size corresponding to that of the energy storage device 10 when viewed in the X-axis direction. The second intermediate main body portion 21B has a plurality of protruding strips 211B extending in the Y-axis direction and arranged at intervals in the Z-axis direction. The plurality of protruding strips 211B protrudes from a surface 212B of the second intermediate main body portion 21B facing the energy storage devices 10.

The two second intermediate locking pieces 22B extend from positions spaced apart in the Y-axis direction at end portion on one side of the second intermediate main body portion 21B in the Z-axis direction. The interval between the two second intermediate locking pieces 22B in the Y-axis direction corresponds to the dimension of the duct portion 6 in the Y-axis direction, similarly to the two first intermediate locking pieces 22A of the first intermediate adjacent member 2A. Accordingly, the second intermediate locking piece 22B extends along the duct portion 6 in the Z-axis direction. The configuration of these two second intermediate locking pieces 22B is the same as the configuration of the first intermediate locking piece 22A. That is, the second intermediate locking piece 22B includes a locking piece main body 221B and a locking portion 222B.

The second intermediate restricting portion 23B extends in the X-axis direction from a corner portion of the rectangular second intermediate main body portion 21B and abuts the energy storage device 10 (more specifically, the case 11) adjacent to the second intermediate main body portion 21B from the outside in the Y-Z plane direction, thereby restricting the relative movement of the energy storage device 10 in the Y-Z plane direction with respect to the second intermediate main body portion 21B. The second intermediate restricting portions 23B of the present embodiment extend from the second intermediate main body portion 21B toward one side and the other side in the X-axis direction.

The second fixing portion 24B is disposed at the end portion of the second intermediate main body portion 21B in the Y-axis direction. The plurality of second fixing portions 24B engages with the first fixing portions 4 to fix the second intermediate adjacent member 2B to the holding portion 3. The second fixing portion 24B of the present embodiment is an insert nut. The first fixing portion 4 of the present embodiment is a bolt, and in a state where it is inserted through the holding portion 3, it is screwed into the second fixing portion 24B, thereby fastening (fixing) the second intermediate adjacent member 2B to the holding portion 3.

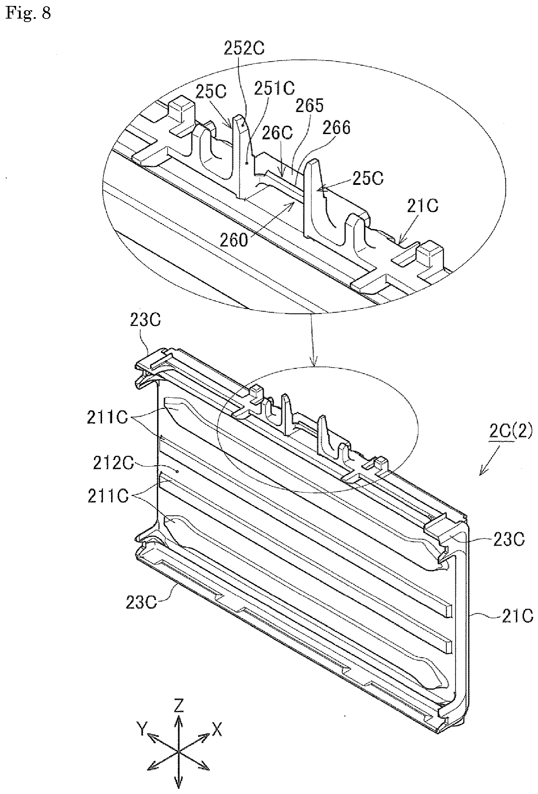

As also illustrated in Figs. 8 to 10, the two end adjacent members 2C each include an end main body portion 21C that overlaps the energy storage device 10 when viewed in the X-axis direction, an end restricting portion 23C that restricts the movement of the energy storage device 10 adjacent to the end main body portion 21C relative to the end main body portion 21C, and a pair of guide portions 25C extending from the end main body portion 21C in the Z-axis direction. The two end adjacent members 2C each include an engaged portion 26C engageable with the duct portion 6 at an end portion on one side in the Z-axis direction (the direction in which the gas release valve 132 of the energy storage device 10 faces).

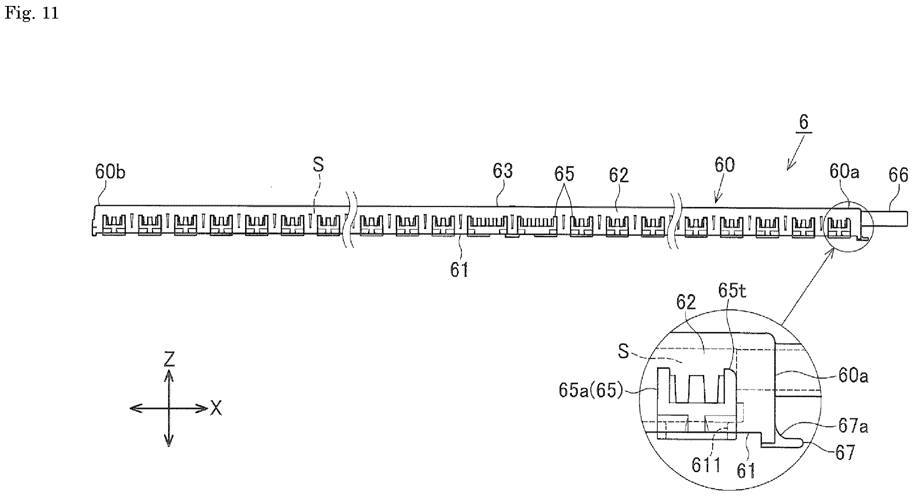

In the energy storage apparatus 1 of the present embodiment, the two end adjacent members 2C each include the engaged portions 26C, but the present invention is not limited to this configuration. In the case where the duct portion 6 includes only one portion 67 (see Fig. 11) that engages with the end adjacent member 2C, as in the case of the energy storage apparatus 1 of the present embodiment, only one of the two end adjacent members 2C may include the engaged portion 26C.

The end main body portion 21C is a portion that faces the long wall portion 123 of the energy storage device 10 in a state of partial abutment therewith. Similarly to the first intermediate main body portion 21A of the first intermediate adjacent member 2A and the second intermediate main body portion 21B of the second intermediate adjacent member 2B, the end main body portion 21C also cooperates with an adjacent energy storage device 10 to form a flow path R between the energy storage device 10 and the end main body portion 21C, through which a temperature adjusting fluid can flow. The end main body portion 21C of the present embodiment has a rectangular plate shape with a size corresponding to that of the energy storage device 10 when viewed in the X-axis direction. The end main body portion 21C has a plurality of protruding strips 211C extending in the Y-axis direction and arranged at intervals in the Z-axis direction. The plurality of protruding strips 211C protrudes from a surface 212C of the end main body portion 21C facing the energy storage devices 10.

The end restricting portion 23C extends in the X-axis direction from a corner portion of the rectangular end main body portion 21C and abuts the energy storage device 10 (more specifically, the case 11) adjacent to the end main body portion 21C from the outside in the Y-Z plane direction, thereby restricting the relative movement of the energy storage device 10 in the Y-Z plane direction with respect to the end main body portion 21C. The end restricting portion 23C of the present embodiment extends from the end main body portion 21C toward the energy storage devices 10 in the X-axis direction.

The pair of guide portions 25C extend along the duct portion 6 on both sides of the duct portion 6 in the Y-axis direction. The pair of guide portions 25C are disposed at an interval corresponding to the dimension of the duct portion 6 in the Y-axis direction, and the guide portions 25C extend to one side in the Z-axis direction along the duct portion 6 from the end main body portion 21C.

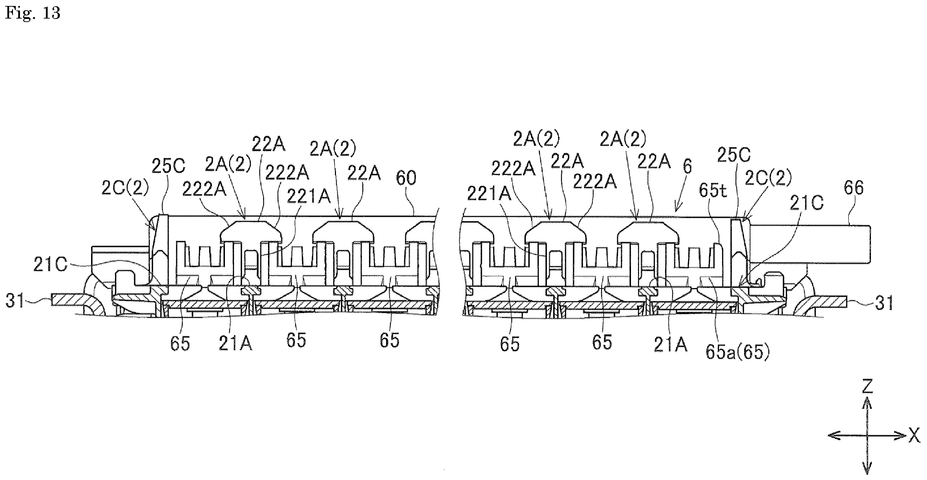

These guide portions 25C are longer in the Z-axis direction than the first intermediate locking pieces 22A of the first intermediate adjacent member 2A (see Fig. 13). In the Z-axis direction, since the dimensions of the first intermediate locking piece 22A of the first intermediate adjacent member 2A and the dimensions of the second intermediate locking piece 22B of the second intermediate adjacent member 2B are the same, the guide portion 25C is longer than the second intermediate locking piece 22B of the second intermediate adjacent member 2B.

The dimension (thickness) of the guide portion 25C in the Y-axis direction is larger than the dimension (thickness) of the first intermediate locking piece 22A of the first intermediate adjacent member 2A in the Y-axis direction and the dimension (thickness) of the second intermediate locking piece 22B of the second intermediate adjacent member 2B in the Y-axis direction. Accordingly, the bending rigidity of the guide portion 25C is greater than the bending rigidity of the first intermediate locking piece 22A and the second intermediate locking piece 22B. In detail, the bending rigidity in the direction in which the interval between the tips of a pair of guide portions 25C increases (Y-axis direction) is greater than the bending rigidity in the direction in which the interval between the tips of the first intermediate locking piece 22A of the first intermediate adjacent member 2A increases (Y-axis direction), and is also greater than the bending rigidity in the direction in which the interval between the tips of the second intermediate locking piece 22B of the second intermediate adjacent member 2B increases (Y-axis direction).

Specifically, the guide portion 25C has a guide surface 251C that guides the duct portion 6 to the attachment position when the duct portion 6 is attached to the apparatus main body A, and a leading surface 252C that makes it easier to insert the duct portion 6 between a pair of guide portions 25C (that is, between a pair of guide surfaces 251C).

The guide surface 251C is a surface that extends in an X-Z plane direction and is elongated in the Z-axis direction. The leading surface 252C is disposed at the tip of the guide portion 25C, and is a surface that is located outward in the Y-axis direction (in a direction away from the center position in the Y-axis direction of the end adjacent member 2C) as it moves toward one side in the Z-axis direction, and is a surface that is inclined with respect to the guide surface 251C. The guide surface 251C and the leading surface 252C are connected in the Z-axis direction.

The engaged portion 26C is a portion with which the duct portion 6 is engaged when the duct portion 6 is attached to the apparatus main body A. The engaged portion 26C includes a recess 260 that is recessed outward in the X-axis direction (in a direction away from the apparatus main body A), and engages with the duct portion 6 by inserting or fitting an engaging portion 67 (see Fig. 11), which is a part of the duct portion 6, into the recess 260. The engaged portion 26C is disposed in the center in the Y-axis direction (more specifically, between the pair of guide portions 25C) at end portion on one side of the end main body portion 21C in the Z-axis direction.

Specifically, the engaged portion 26C includes a bottom surface portion 261 that extends in an X-Y plane direction at one edge in the Z-axis direction of the end main body portion 21C and faces one side in the Z-axis direction, a restricting surface portion 262 that extends in the X-Y plane direction at a position spaced apart in the Z-axis direction from the bottom surface portion 261 and faces the other side in the Z-axis direction, a pair of side surface portions 263 that connect edges in the Y-axis direction of the bottom surface portion 261 and the restricting surface portion 262, and a closing surface portion 264 that connects outer edges in the X-axis direction of the bottom surface portion 261, the restricting surface portion 262, and the pair of side surface portions 263. The bottom surface portion 261, the restricting surface portion 262, the pair of side surface portions 263, and the closing surface portion 264 form a recess 260.

The engaged portion 26C includes a restricting portion (first portion) 265 having a restricting surface portion 262 and a reinforcing portion (second portion) 266 that reinforces the restricting portion 265.

The restricting portion 265 is a plate-shaped portion having a restricting surface portion 262 and extending in a plane (X-Y plane) perpendicular to the Z-axis direction, and faces the engaging portion 67 of the duct portion 6 from one side in the Z-axis direction (the opposite side to the plurality of energy storage devices) (see Fig. 17). The reinforcing portion 266 protrudes from the edge of the restricting portion 265 to one side in the Z-axis direction (in a direction away from the plurality of energy storage devices 10) and extends along the edge of the restricting portion 265 (more specifically, the inner edge in the X-axis direction).

As illustrated in Figs. 1 to 5, the holding portion 3 holds the layered product D by surrounding the periphery of the layered product D. That is, the holding portion 3 surrounds the periphery of the plurality of energy storage devices 10 and the plurality of adjacent members 2, thereby holding the plurality of energy storage devices 10 and the plurality of adjacent members 2 together. The holding portion 3 is made of metal, resin, or the like.

Specifically, the holding portion 3 includes a pair of terminal portions 31 disposed on both sides of the layered product D in the X-axis direction, an extension portion 32 extending in the X-axis direction along the layered product D at a position aligned with the layered product D in the Y-axis direction, and a connecting portion 33 connecting the terminal portions 31 and the extension portion 32. The holding portion 3 of the present embodiment includes a pair of extension portions 32 disposed at an interval in the Y-axis direction such that the layered product D is located between them.

The pair of terminal portions 31 are disposed to interpose the end adjacent member 2C between the energy storage devices 10 disposed at the ends in the X-axis direction. Specifically, the pair of terminal portions 31 include a terminal end main body 311 extending along the Y-Z plane direction, and a flange portion 313 extending from the terminal end main body 311 in a direction away from the energy storage device 10 in the X-axis direction (see Fig. 5).

The terminal end main body 311 has a rectangular shape with a size corresponding to that of the energy storage device 10 when viewed in the X-axis direction. Specifically, the terminal end main body 311 has a rectangular shape that is elongated in the Y-axis direction, and has a plurality of through holes 312 disposed at intervals in the Z-axis direction at both end portions in the Y-axis direction (see Fig. 5). The flange portion 313 extends, in the X-axis direction, from an end portion on one side of the terminal end main body 311 in the Z-axis direction, and also extends in the Y-axis direction.

The pair of extension portions 32 include an extension portion main body 320 that faces the short wall portion 124 of the energy storage device 10 via the insulator 5, a first piece portion 321 that extends from an end portion on one side of the extension portion main body 320 in the Z-axis direction along the lid plate 13 of the energy storage device 10 in the Y-axis direction and also extends in the X-axis direction, a second piece portion 322 that extends from an end portion on the other side of the extension portion main body 320 in the Z-axis direction along the closing portion 121 of the energy storage device 10 in the Y-axis direction and also extends in the X-axis direction, and a pair of third piece portions 323 that extend from an end portion of the extension portion main body 320 in the X-axis direction along the terminal portion 31 in the Y-axis direction and also extend in the Z-axis direction.

The extension portion main body 320 is a plate-shaped portion extending along the short wall portion 124 of the energy storage device 10, and has a plurality of ventilation openings 3201 penetrating in the Y-axis direction to allow temperature adjusting fluid to flow in or out of the flow path R, and a plurality of first fixing holes 3202 penetrating in the Y-axis direction at positions corresponding to the second fixing portion 24B of the second intermediate adjacent member 2B. The first fixing portion 4 is inserted into the first fixing hole 3202.

The first piece portion 321 is a strip-shaped portion that is elongated in the X-axis direction, and the second piece portion 322 is also a strip-shaped portion that is elongated in the X-axis direction. The width of the portion of the second piece portion 322 excluding both end portions in the X-axis direction (the dimension in the Y-axis direction) is larger than the width of the first piece portion 321. The pair of third piece portions 323 have a plurality of second fixing holes 3231 disposed at intervals in the Z-axis direction. The second fixing hole 3231 is disposed at a position corresponding to the through hole 312 of the terminal portion 31.

The plurality of connecting portions 33 fastens the terminal portion 31 and the extension portion 32 together while being inserted through the through hole 312 of the terminal portion 31 and the second fixing hole 3231 of the extension portion 32 (more specifically, the third piece portion 323). The connecting portion 33 of the present embodiment includes a bolt 331 and a nut 332.

The insulator 5 has insulating properties. The insulator 5 is disposed between the extension portion 32 and the layered product D. Specifically, the energy storage apparatus 1 includes a pair of insulators 5, and the insulators 5 cover the areas of the extension portions 32 that face the plurality of energy storage devices 10. In this way, the insulator 5 provides insulation between extension portion 32 and the plurality of energy storage devices 10. A ventilation area 51 having a size and a shape corresponding to the ventilation opening 3201 of the extension portion main body 320 is provided at a position corresponding to the ventilation opening 3201 of the extension portion main body 320 in the insulator 5.

The seal portion 7 is a portion or a member disposed between the apparatus main body A and the duct portion 6 to suppress gas leakage from between the apparatus main body A and the duct portion 6, and has a seal portion through hole 71 that communicates between the gas release valve 132 and a guide space S within the duct portion 6 (see Figs. 2 and 17). The seal portion 7 extends in the X-axis direction at a position corresponding to the gas release valve 132 in the Y-axis direction at an end portion on one side of the apparatus main body A in the Z-axis direction. The seal portion 7 of the present embodiment is formed of a foam such as a fluorine-based, silicone-based, or urethane-based resin, and provides a seal between the apparatus main body A and the duct portion 6.

Specifically, the seal portion 7 is a strip-shaped member whose width direction is the Y-axis direction and whose longitudinal direction is the X-axis direction, and has a seal portion through hole 71 at a position corresponding to the gas release valve 132 of the energy storage device 10 (more specifically, at a position overlapping the gas release valve 132 when viewed in the Z-axis direction). That is, the seal portion 7 has a plurality of seal portion through holes 71, and the plurality of seal portion through holes 71 is arranged in a row at intervals in the X-axis direction in the seal portion 7.

The width (dimension in the Y-axis direction) of the seal portion 7 of the present embodiment is a size corresponding to that of the duct portion 6. The seal portion through hole 71 has a shape and a size corresponding to the gas release valve 132, and the seal portion through hole 71 of the present embodiment is a circular hole having the same or approximately the same diameter as the gas release valve 132.

The duct portion 6 is disposed along the X-axis direction while facing the gas release valve 132 in the Z-axis direction. The duct portion 6 of the present embodiment extends along the energy storage devices 10 from one end of the energy storage devices 10 in the X-axis direction to the other end of the energy storage devices 10.

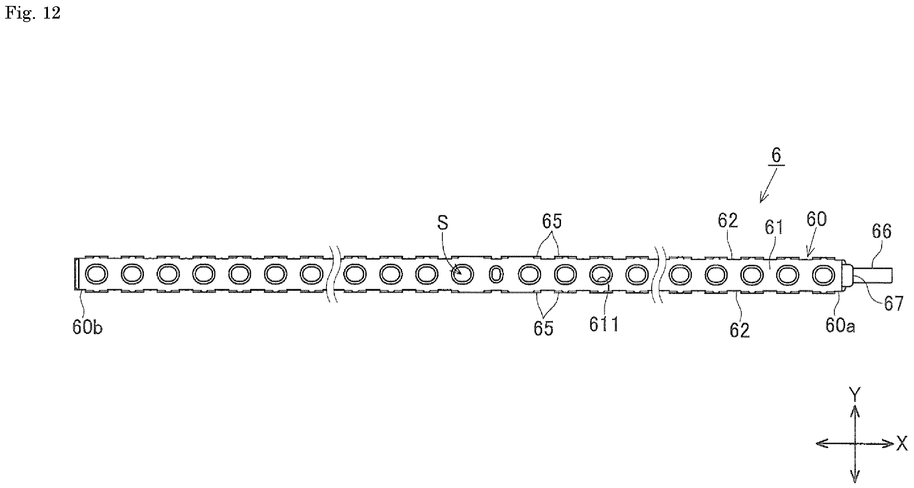

Specifically, as also illustrated in Figs. 11 and 12, the duct portion 6 includes a duct portion main body 60 that extends in the X-axis direction and guides gas discharged from the gas release valve 132 of the energy storage device 10 in the X-axis direction, a joint portion 66 that is disposed at one end 60a of the duct portion main body 60 in the X-axis direction (the right side in Fig. 11), and an engaging portion 67 that is disposed at the one end 60a of the duct portion main body 60. The duct portion 6 also includes a plurality of locked portions 65 which engages with the intermediate locking pieces 22A and 22B of the adjacent member 2 (more specifically, locking portions 222A and 222B of the intermediate locking pieces 22A and 22B: see Figs. 6 and 7). The duct portion 6 of the present embodiment is made of resin such as polybutylene terephthalate or glass fiber blended resin (polybutylene terephthalate-glass fiber). The one end 60a of the duct portion main body 60 forms the engaging end of the duct portion 6 described above.

The duct portion main body 60 is a hollow cylindrical portion that extends in the X-axis direction and has a guide space S therein. The duct portion main body 60 of the present embodiment extends from an end portion on one side (right side in Fig. 1) of the apparatus main body A in the X-axis direction to an end portion on the other side (left side in Fig. 1), and the other end portion 60b (left side in Fig. 11) is closed. The duct portion main body 60 is disposed at a position overlapping the gas release valve 132 of the energy storage device 10 when viewed in the Z-axis direction.

Specifically, the duct portion main body 60 includes a bottom wall portion 61 facing the apparatus main body A (a plurality of energy storage devices 10), a pair of side wall portions 62 extending from both ends of the bottom wall portion 61 in the Y-axis direction to one side in the Z-axis direction, and a top wall portion 63 connecting end portions on one side of the pair of side wall portions 62 in the Z-axis direction, and the space surrounded by the bottom wall portion 61, the pair of side wall portions 62, and the top wall portion 63 forms a guide space S that can guide gas discharged from the gas release valve 132 to the joint portion 66.

The bottom wall portion 61 is a strip-shaped portion whose width direction is the Y-axis direction and whose longitudinal direction is the X-axis direction, and is a portion of the duct portion main body 60 that interposes the seal portion 7 between itself and the apparatus main body A. The bottom wall portion 61 has a duct portion through hole 611 that communicates between the seal portion through hole 71 and the guide space S at a position corresponding to the seal portion through hole 71 of the seal portion 7 (in other words, at a position corresponding to the gas release valve 132 of the energy storage device 10). That is, the bottom wall portion 61 has a plurality of duct portion through holes 611, and the plurality of duct portion through holes 611 is arranged in a row at intervals in the X-axis direction on the bottom wall portion 61.

The plurality of locked portions 65 is a portion where the intermediate locking pieces 22A and 22B of the intermediate adjacent members 2A and 2B engage (in the example of the present embodiment, hook) to fix the duct portion 6 to the intermediate adjacent members 2A and 2B (that is, the apparatus main body A), and the locked portions 65 protrude outward in the Y-axis direction from the side wall portion 62. The plurality of locked portions 65 is disposed on the side wall portion 62 at intervals in the X-axis direction. More specifically, the plurality of locked portions 65 is disposed at positions corresponding to the duct portion through holes 611 of the bottom wall portion 61 in the X-axis direction.

Among the plurality of locked portions 65 arranged at intervals in the X-axis direction on the side wall portion 62, the locked portion 65a closest to the joint portion 66 includes an arc-shaped abutment portion 65t at an outer end portion in the X-axis direction and at an end portion on one side in the Z-axis direction, when viewed in the Y-axis direction. The locked portion 65a including the abutment portion 65t is disposed on the pair of side wall portions 62.

The joint portion 66 is a portion to which another member can be connected and to which gas guided to the one end 60a of the duct portion main body 60 can be released to the other member, and which extends from the one end 60a of the duct portion main body 60 in the X-axis direction. The joint portion 66 of the present embodiment is cylindrical and communicates between the guide space S and the external space.

The engaging portion 67 is a portion that protrudes in the X-axis direction from the one end 60a of the duct portion main body 60, and is inserted into a recess 260 of the engaged portion 26C of the end adjacent member 2C (see Fig. 17). In the energy storage apparatus 1 of the present embodiment, the engaging portion 67 engages with the end adjacent member 2C of the pair of end adjacent members 2C on one side in the X-axis direction (that is, closer to the one end 60a of the duct portion main body 60).

The engaging portion 67 has a curved surface 67a on one side in the Z-axis direction. Specifically, the curved surface 67a is curved to form an arc shape when viewed in the Y-axis direction. The engaging portion 67 of the present embodiment is a rectangular portion that is elongated in the Y-axis direction when viewed in the Z-axis direction. Both end portions in the Y-axis direction of the tip of the end adjacent member 2C that faces the closing surface portion 264 of the engaged portion 26C are arc-shaped when viewed in the Z-axis direction (see Fig. 12).

In the duct portion 6 configured as described above, in a state where it is attached to the apparatus main body A with the seal portion 7 interposed between the duct portion 6 and the apparatus main body A, as also illustrated in Fig. 13, the locking piece main bodies 221A and 221B of the corresponding intermediate adjacent members 2A and 2B are located between adjacent locked portions 65 spaced apart in the X-axis direction, and the locking portions 222A and 222B extending from the locking piece main bodies 221A and 221B abut (engage) with the locked portions 65 adjacent to the locking piece main bodies 221A and 221B in the X-axis direction from one side in the Z-axis direction. Accordingly, the duct portion 6 is locked to the apparatus main body A (the intermediate adjacent members 2A and 2B).

The duct portion 6 is attached to the apparatus main body A in the following manner.

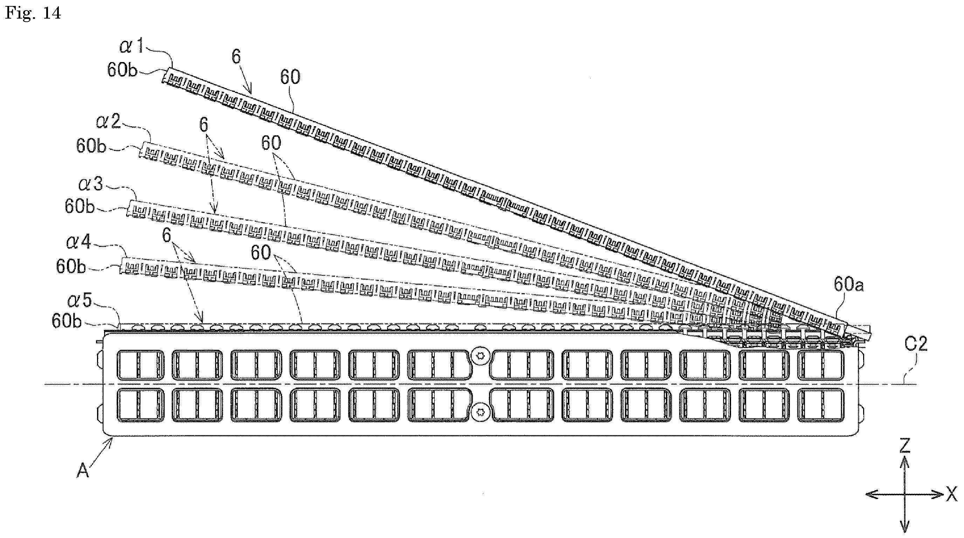

First, the duct portion 6 (more specifically, the duct portion main body 60) is inclined relative to the apparatus main body A, and the engaging portion 67 of the duct portion 6 is inserted into the engaged portion 26C (more specifically, the recess 260) of one of the end adjacent members 2C (see the duct portion 6 in the first posture α1 in Fig. 14).

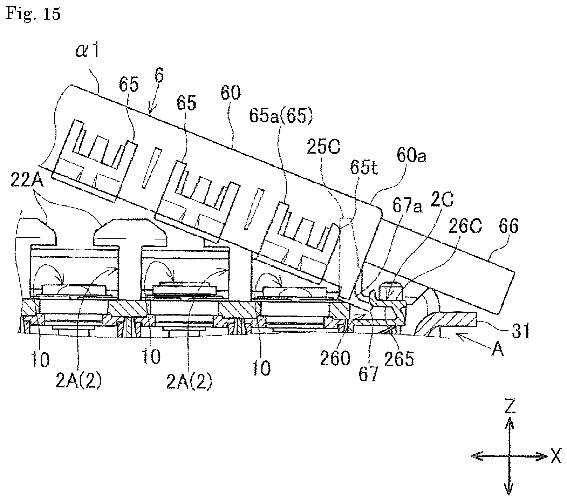

Specifically, the engaging portion 67 of the duct portion 6 is inserted into the engaged portion 26C (more specifically, the recess 260) of one of the end adjacent members 2C such that the duct portion 6 overlaps a first center line C1 extending in the stacking direction of the apparatus main body A when viewed in the Z-axis direction (a line extending in the X-axis direction through the center position of the apparatus main body A in the Y-axis direction: see Fig. 2) and is inclined relative to a second center line C2 extending in the stacking direction of the apparatus main body A when viewed in the Y-axis direction (a line extending in the X-axis direction through the center position of the apparatus main body A in the Z-axis direction: see Fig. 14) (see Fig. 15).

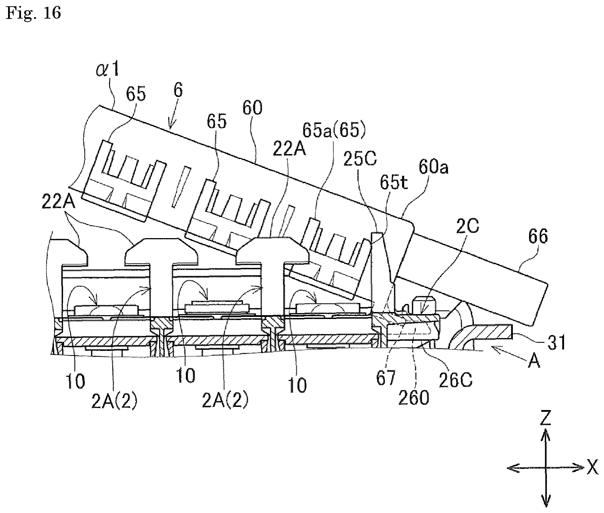

At this time, the engaging portion 67 of the duct portion 6 is inserted into the engaged portion 26C (the recess 260) of one of the end adjacent members 2C up to a position where the abutment portion 65t of the locked portion 65a disposed closest to the joint portion 66 on the side wall portion 62 of the duct portion main body 60 abuts against the corresponding guide portion 25C of one of the end adjacent members 2C (see Fig. 16).

In this state, the duct portion 6 is rotated along the X-Z plane with the engaging portion 67 inserted into the engaged portion 26C as the rotation center such that the other end portion 60b of the duct portion main body 60 faces between the pair of guide portions 25C of the other end adjacent member 2C (see the duct portion 6 in the first posture α1 to the fifth posture α5 in Fig. 14).

When the duct portion 6 rotates, the abutment portion 65t of the locked portion 65a that abuts against the guide portion 25C is arc-shaped when viewed in the Y-axis direction, and the engaging portion 67 has a curved surface 67a at a position close to the restricting portion 265 of the engaged portion 26C, so that the rotation is smooth even when they abut against each other. In the energy storage apparatus 1 of the present embodiment, during the rotation of the duct portion 6, the guide portion 25C and the abutment portion 65t of the locked portion 65a abut against each other, and the curved surface 67a of the engaging portion 67 and the restricting portion 265 of the engaged portion 26C abut against each other. However, in a state where the duct portion 6 is in the fifth posture α5, a gap is formed between the guide portion 25C and the locked portion 65a (see Fig. 13), and a small gap is formed between the curved surface 67a of the engaging portion 67 and the restricting portion 265 of the engaged portion 26C (see Fig. 17).

With this rotation, the duct portion main body 60 is pushed between the pair of first intermediate locking pieces 22A of the first intermediate adjacent member 2A and between the pair of second intermediate locking pieces 22B of the second intermediate adjacent member 2B, causing the intermediate locking pieces 22A and 22B to engage with the corresponding locked portions 65 of the duct portion 6 (hook in the example of the present embodiment: see Fig. 13), thereby locking (fixing) the duct portion 6 to the apparatus main body A.

Referring back to Figs. 1 and 2, the plate portion C includes a plurality of bus bars B, a plate portion main body 8 that accommodates the plurality of bus bars B, and a harness 9 that has a plurality of electric wires connected to the bus bars B. In Fig. 2, some of the bus bars B among the plurality of bus bars B disposed within the plate portion C are illustrated outside the plate portion C in order to describe the configuration.

The plurality of bus bars B is a plate-shaped members having conductivity such as metal, and connects terminals 14 of different energy storage devices 10 to each other. This plurality of bus bars B connects terminals 14 of adjacent energy storage devices 10 to each other, thereby providing electrical continuity therebetween. The bus bar B of the present embodiment is welded to the terminal 14.

The harness 9 includes a cable portion 91 having a plurality of electric wires, and a connector 92 disposed at an end portion of the cable portion 91. An end portion on one side of the electric wire of the cable portion 91 is connected to the bus bar B or the like, and an end portion on the other side of the electric wire is connected to the connector 92.

The cable portion 91 is formed by bundling at least a part of a plurality of electric wires whose end portion on one side is connected to the bus bar B or the like. The cable portion 91 is disposed on the plate portion main body 8 with an end portion on one side protruding from the plate portion main body 8 in the X-axis direction. The connector 92 is attached to the tip of the cable portion 91 in the protruding direction. The connector 92 of the present embodiment is a multi-core connector, and two connectors are disposed.

The plate portion main body 8 is made of an insulating material such as resin, and is a plate-shaped portion or member that covers the surface of the apparatus main body A on which the terminals 14 are arranged. The plate portion main body 8 is a plate-shaped member whose dimension in the Z-axis direction is smaller than its dimensions in the X-axis direction and Y-axis direction, and has a rectangular shape with a size corresponding to that of the apparatus main body A when viewed in the Z-axis direction. The plate portion main body 8 includes a bus bar accommodating portion 81 that accommodates the bus bar B connected to the terminal 14 of the energy storage device 10, an electric wire arrangement portion 82 in which the harness 9 is disposed, and a plurality of lid portions 83. The plate portion main body 8 includes a duct arrangement portion 85 in which a part of the layered product D (in the example of the present embodiment, the gas release valve 132 of the energy storage device 10) is exposed when viewed in a direction from the plate portion C toward the apparatus main body A (that is, when viewed in one side to the other side in the Z-axis direction) in a state where the duct portion 6 is not disposed.

The plate portion main body 8 of the present embodiment includes two bus bar accommodating portions 81 disposed at positions interposing the duct arrangement portion 85 in the Y-axis direction, and a plurality of connecting portions 84 extending in the Y-axis direction and connecting the two bus bar accommodating portions 81, and the plurality of connecting portions 84 is disposed at intervals in the X-axis direction.

The two bus bar accommodating portions 81 accommodate a plurality of bus bars B with at least one bus bar B (two in the example of the present embodiment) surrounded by a wall.

The electric wire arrangement portion 82 is a groove-shaped portion in the plate portion main body 8, and a cable portion 91 of the harness 9 is disposed inside the electric wire arrangement portion 82.

The plurality of lid portions 83 is a plate-shaped portion that openably and closably covers end openings on one side in the Z-axis direction of the wall surrounding the bus bar B in the bus bar accommodating portion 81. The lid portion 83 has a rectangular plate shape, and a part of the peripheral edge and a part of the wall surrounding the bus bar B are connected to each other.

The energy storage apparatus 1 of the first embodiment configured as described above includes a plurality of energy storage devices 10 arranged in the X-axis direction (first direction), the plurality of energy storage devices 10 including gas release valves 132 disposed facing the Z-axis direction (second direction) perpendicular to the X-axis direction, a pair of end adjacent members (end members) 2C disposed on both sides of the plurality of energy storage devices 10 in the X-axis direction, and a duct portion 6 that overlaps the gas release valve 132 in the Z-axis direction. The duct portion 6 includes a duct portion main body 60 that extends in the X-axis direction and guides gas discharged from the gas release valve 132 in the X-axis direction, a joint portion 66 that is disposed at one end 60a of the duct portion main body 60 in the X-axis direction, and to which another member is connected and which is capable of releasing the gas guided to the one end 60a to the other member, and an engaging portion 67 that is disposed at the one end 60a of the duct portion main body 60 and engages with an end adjacent member of the pair of end adjacent members 2C on the other side in the X-axis direction.

In this way, since the engaging portion 67 disposed at the one end 60a of the duct portion main body 60 together with the joint portion 66 engages with the end adjacent member 2C, movement of the joint portion 66 relative to the end adjacent member 2C is suppressed when a force is applied to the duct portion 6 due to vibrations applied to the energy storage apparatus 1 or pressure when gas is released from the gas release valve 132 of the energy storage device 10, or the like. Therefore, movement (relative movement) of the joint portion 66 relative to other members is suppressed. Accordingly, in the energy storage apparatus 1 of the present embodiment, gas leakage from the joining portion between the joint portion 66 and other members (such as a hose or a pipe) is suppressed.

In the energy storage apparatus 1 of the present embodiment, one of a pair of end adjacent members 2C (that is, the end adjacent member (end member) 2C facing the joint portion 66 in the X-axis direction) includes an engaged portion 26C that engages with the engaging portion 67 at the end portion facing the gas release valve 132 in the Z-axis direction (second direction), and the engaging portion 67 extends in the X-axis direction (first direction) from the one end 60a of the duct portion main body 60. The engaged portion 26C includes a restricting portion (first portion) 265 that faces the engaging portion 67 from the opposite side to the plurality of energy storage devices 10 in the Z-axis direction and extends in a planar direction perpendicular to the Z-axis direction, and a reinforcing portion (second portion) 266 that protrudes from the edge of the restricting portion 265 in a direction away from the plurality of energy storage devices 10 in the Z-axis direction and extends along the edge of the restricting portion 265.

According to this energy storage apparatus 1, since the strength of the restricting portion 265 is improved by the reinforcing portion 266, the restricting portion 265 is less likely to deform when the duct portion 6 (more specifically, the one end 60a of the duct portion main body 60) attempts to move in the Z-axis direction away from the plurality of energy storage devices 10 (the end adjacent member 2C with which the engaging portion 67 engages), thereby more effectively suppressing the movement of the duct portion 6. As a result, gas leakage from the joining portion between the joint portion 66 and other members is more effectively suppressed.

The energy storage apparatus of the present invention is not limited to the first embodiment described above, and it goes without saying that various modifications can be made without departing from the gist of the present invention. The configuration of one embodiment can be added to the configuration of another embodiment, and a part of the configuration of one embodiment can be replaced with the configuration of another embodiment. Furthermore, a part of the configuration of one embodiment can be deleted.

In the energy storage apparatus 1 of the first embodiment described above, the engaging portion 67 of the duct portion 6 engages with a resin member (in the example of the above embodiment, the end adjacent member 2C), but the present invention is not limited to this configuration. The engaging portion 67 of the duct portion 6 may be configured to engage with a metal member (the terminal portion 31). In other words, it is sufficient that the engaging end of the duct portion 6 (the end portion close to the joint portion 66) is configured to engage with either one of a pair of members (end members) disposed on both sides of the plurality of energy storage devices 10 in the X-axis direction (first direction).

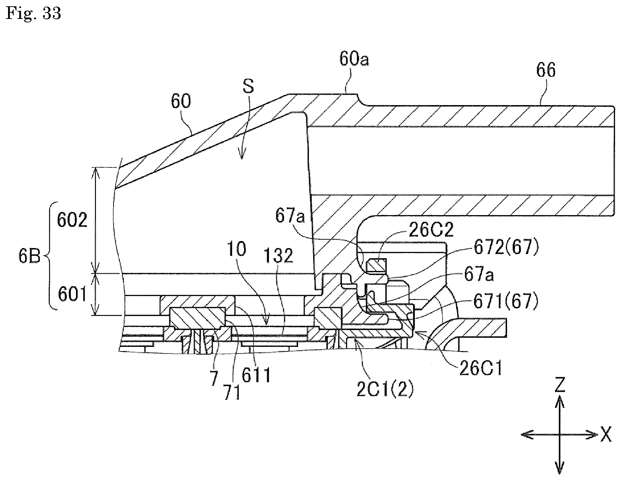

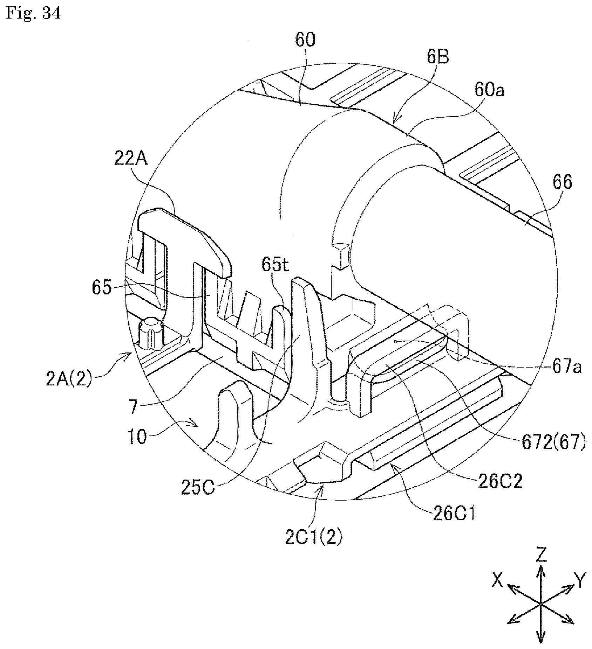

In the energy storage apparatus 1 of the first embodiment described above, the duct portion 6 includes one portion (in the example of the above embodiment, the engaging portion 67) that engages with an end member (one of a pair of members disposed on both sides of the plurality of energy storage devices 10 in the X-axis direction: the end adjacent member 2C in the example of the above embodiment), but the present invention is not limited this configuration. The duct portion 6 may have a plurality of portions at the engaging end for engaging with the end member (see Figs. 33 and 34).

As illustrated in Figs. 33 and 34, a duct portion 6B includes two engaging portions (a first engaging portion 671 and a second engaging portion 672) that protrude (extend) outward in the X-axis direction from the one end 60a of the duct portion main body 60, and these two engaging portions 671 and 672 may be disposed at an interval in the Z-axis direction.

In this case, when the duct portion 6 is attached to the apparatus main body A, it is preferable that the duct portion 6 is inclined relative to the apparatus main body A and the engaging end (the engaging portion 67 or the like) of the duct portion 6 is engaged with the end member, and the duct portion 6 is rotated around this engaged portion as the rotation center and pushed between a pair of intermediate locking pieces 22A and 22B of the intermediate adjacent members 2A and 2B, whereby the locked portion 65 of the duct portion 6 engages with the corresponding intermediate locking pieces 22A and 22B of the intermediate adjacent members 2A and 2B.

The specific engagement structure between the engaging end of the duct portion 6 and the end member (in the example of the above embodiment, the end adjacent member 2C) is not limited. In the energy storage apparatus 1 of the above embodiment, the duct portion 6 and the end adjacent member 2C are engaged with each other by inserting the engaging portion 67 protruding from the duct portion main body 60 of the duct portion 6 into the recess 260 of the end adjacent member 2C, but the configuration may also be such that the engaging end of the duct portion 6 and the end member engage with each other by hooking, fitting, or the like.

Although the duct portion 6 of the first embodiment described above is entirely formed of one member, it may be formed of a plurality of members. In the example illustrated in Figs. 33 and 34, the duct portion 6B may be formed by joining two members in the Z-axis direction. The duct portion 6B includes a first member 601 on the other side in the Z-axis direction (the energy storage device 10 side) and a second member 602 on one side in the Z-axis direction (the opposite side to the energy storage device 10). A method of joining the first member 601 and the second member 602 is arbitrary, and examples thereof include welding (vibration welding or the like) and adhesion.

In this way, when the duct portion 6B includes a plurality of members in the Z-axis direction, it is sufficient that one of the members includes the engaging portion 67 at the one end 60a. In the example illustrated in Figs. 33 and 34, the first member 601 includes a first engaging portion 671, and the second member 602 includes a second engaging portion 672 at the one end 60a. In the duct portion 6B, only the first member 601 may include the engaging portion (the first engaging portion) 671, and only the second member 602 may include the engaging portion (the second engaging portion) 672.

The first engaging portion 671 and the second engaging portion 672 have the same configuration as the engaging portion 67 of the first embodiment. The first engaging portion 671 and the second engaging portion 672 are rectangular portions that are elongated in the Y-axis direction when viewed in the Z-axis direction, and both end portions of the tip in the Y-axis direction are arc-shaped when viewed in the Z-axis direction. The first engaging portion 671 and the second engaging portion 672 have a curved surface 67a that is curved to form an arc shape when viewed in the Y-axis direction. The specific configuration of the first engaging portion 671 and the second engaging portion 672 is not limited to this configuration.

In this way, when the duct portion 6B includes two engaging portions (the first engaging portion 671 and the second engaging portion 672), the end member (in the example illustrated in Figs. 33 and 34, the end adjacent member) 2C1 includes, at one end in the Z-axis direction, a first engaged portion 26C1 with which the first engaging portion 671 engages, and a second engaged portion 26C2 with which the second engaging portion 672 engages. The first engaged portion 26C1 and the second engaged portion 26C2 are arranged at positions facing the first engaging portion 671 and the second engaging portion 672 at an interval in the Z-axis direction.

The first engaged portion 26C1 has the same configuration as the engaged portion 26C of the first embodiment. The second engaged portion 26C2 has an engaged through hole 260A that penetrates in the X-axis direction. The engaged through hole 260A has a shape that engages with the second engaging portion 672 when viewed in the X-axis direction. The second engaging portion 672 is inserted (or passes through) into the engaged through hole 260A. The specific configuration of the first engaged portion 26C1 and the second engaged portion 26C2 is not limited. That is, the first engaged portion 26C1 may have any configuration with which the first engaging portion 671 can engage, and the second engaged portion 26C2 may have any configuration with which the second engaging portion 672 can engage.

In this way, since the duct portion 6B engages with the end member (in Figs. 33 and 34, the end adjacent member) 2C1 by two engaging portions (the first engaging portion 671 and the second engaging portion 672), movement of the joint portion 66 relative to the end member 2C1 is more effectively suppressed. Furthermore, since the first member 601 and the second member 602 arranged in the Z-axis direction are each engaged with the end member 2C1, separation (peeling or the like) of the first member 601 and the second member 602 is suppressed even if a force that separates the first member 601 and the second member 602 is applied due to gas pressure or the like in the guide space S of the duct portion 6B.

When the duct portion 6B includes only the first engaging portion 671 as the engaging portion, even if the duct portion 6B includes two members (a first member 601 and a second member 602), since the first engaging portion 671 disposed at one end of the first member 601 engages with the end member 2C1, movement of the joint portion 66 is suppressed when a force is applied to the duct portion (the member including the first member 601) 6B due to vibrations applied to the energy storage apparatus 1 or pressure when gas is released from the gas release valve 132 of the energy storage device 10, or the like.

When the duct portion 6B includes only the second engaging portion 672 as the engaging portion, since the second engaging portion 672 disposed at one end of the second member 602 engages with the end member 2C1, separation (peeling or the like) from the first member 601 is suppressed even if a force is applied to the second member 602 in a direction away from the first member 601 in the Z-axis direction due to pressure when gas is released from the gas release valve 132 of the energy storage device 10 or the like.

In the energy storage apparatus 1 of the first embodiment described above, the duct portion 6 and the apparatus main body A (the end adjacent member (end member) 2C) are engaged at one end in the X-axis direction, but may also be engaged at the other end portion in the X-axis direction. In this case, in the X-axis direction, the configuration of the engaging portion 67 disposed at one end and the other end portion of the duct portion 6 is the same, and the configuration of the engaged portion 26C disposed at one end (end member) 2C of the apparatus main body A is the same as the configuration of the engaged portion 26C disposed at one end (end member) 2C of the apparatus main body A and the other end portion (end member) 2C.

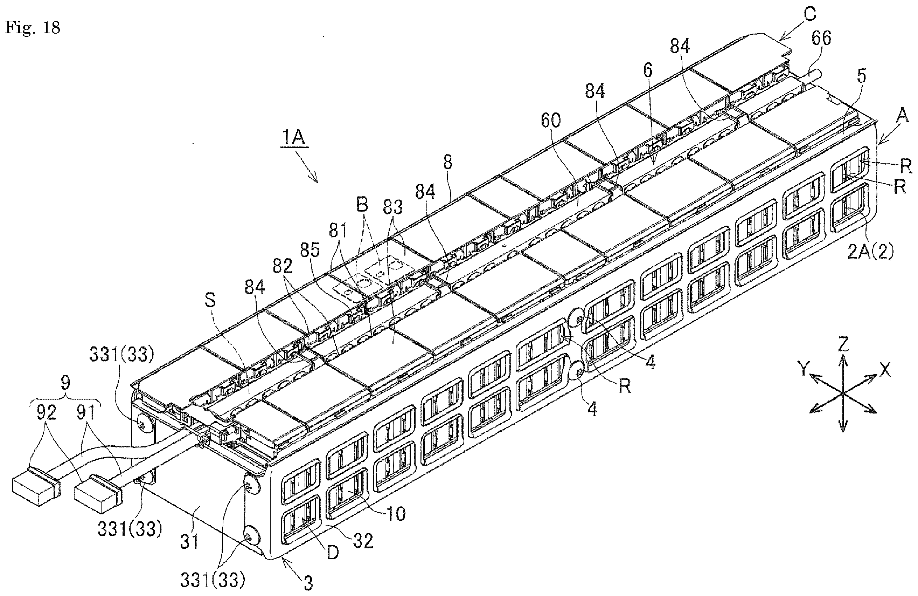

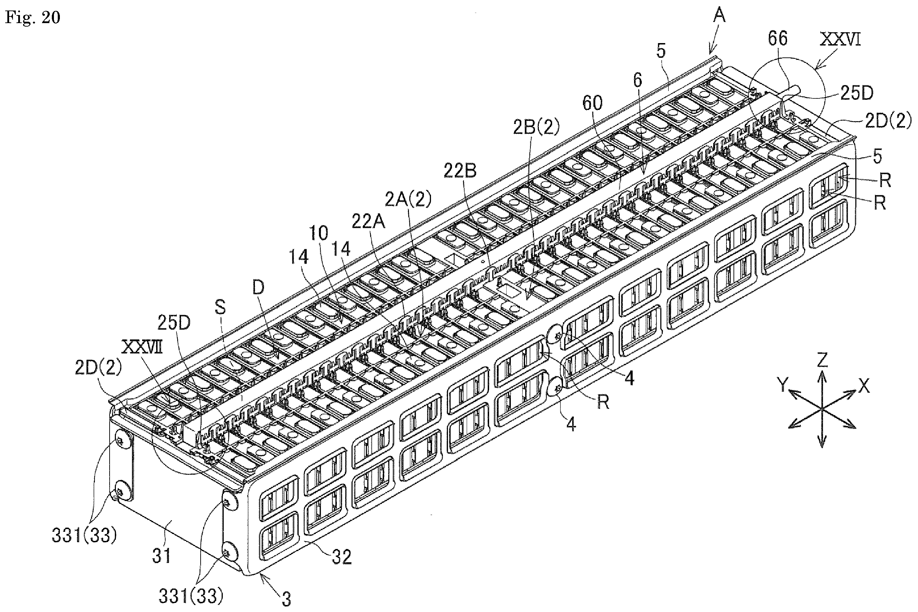

Next, a second embodiment and still another embodiment (hereinafter referred to as a second embodiment) of the present invention will be described with reference to Figs. 18 to 31. In the second embodiment, the same reference numerals are used for the same configurations as in the first embodiment.

As illustrated in Figs. 18 to 22, the energy storage apparatus 1 includes a plurality of energy storage devices 10 each including a gas release valve 132 and arranged in a predetermined direction (first direction), a plurality of adjacent members 2 adjacent to the energy storage devices 10, and a duct portion 6 that overlaps the gas release valve 132 of the energy storage devices 10. The energy storage apparatus 1 of the present embodiment includes a seal portion 7 disposed between the duct portion 6 and the energy storage device 10 to suppress gas leakage from between the duct portion 6 and the energy storage device 10.

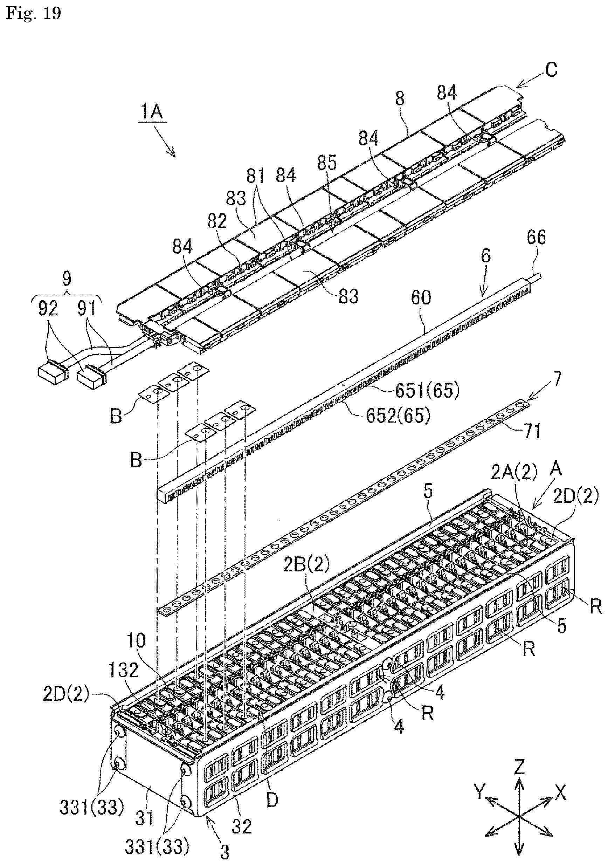

Specifically, the energy storage apparatus 1 includes an apparatus main body A including a plurality of energy storage devices 10, a duct portion 6 attached to the apparatus main body A, and a plate portion C overlapped on the portion of the apparatus main body A where the duct portion 6 is attached. The energy storage apparatus 1 of the present embodiment includes a seal portion 7 disposed between the apparatus main body A and the duct portion 6 (see Fig. 19). In the following, the predetermined direction in which the energy storage devices 10 are arranged is referred to as an X-axis direction (first direction) of the Cartesian coordinate system, the direction in which the apparatus main body A and the plate portion C are arranged is referred to as a Z-axis direction (second direction) of the Cartesian coordinate system, and the direction perpendicular to both the X-axis direction and the Z-axis direction is referred to as a Y-axis direction (third direction) of the Cartesian coordinate system.

The apparatus main body A includes a layered product D having a plurality of energy storage devices 10 and a plurality of adjacent members 2, in which the energy storage devices 10 and the adjacent members 2 are arranged alternately in the X-axis direction, and a holding portion 3 that holds the layered product D. The apparatus main body A includes a first fixing portion 4 that fixes the adjacent member 2 to the holding portion 3, and an insulator 5 that provides insulation between the layered product D and the holding portion 3.

The plurality of energy storage devices 10 is a primary battery, a secondary battery, a capacitor, or the like. The energy storage device 10 of the present embodiment is a chargeable and dischargeable nonaqueous electrolyte secondary battery. More specifically, the energy storage device 10 is a lithium ion secondary battery that utilizes the electron transfer that occurs with the transfer of lithium ions.

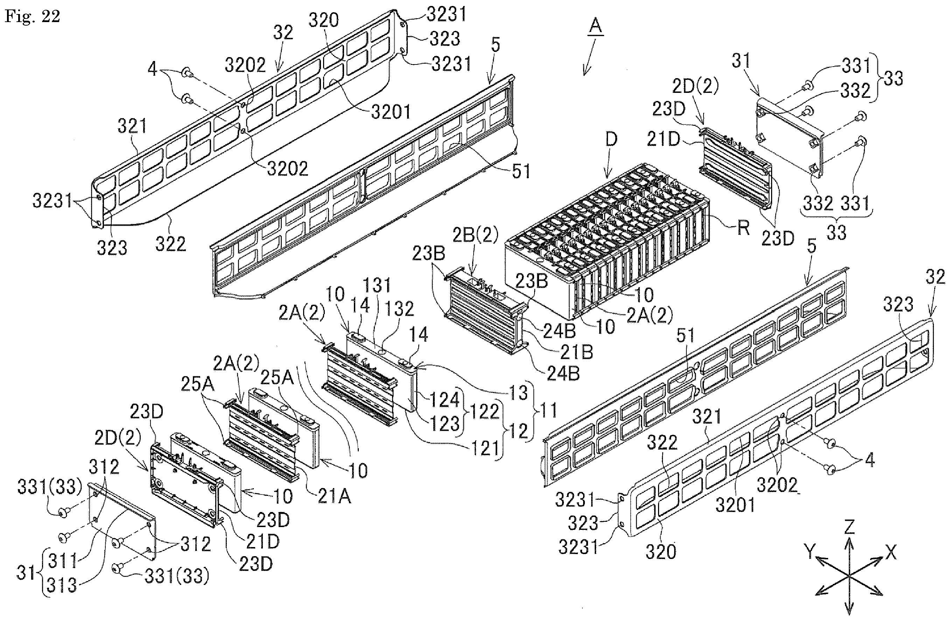

Specifically, the energy storage device 10 includes an electrode assembly, a case 11 that accommodates the electrode assembly together with an electrolyte solution, a terminal 14 that is partially exposed to the outside of the case 11, and a current collector that connects the electrode assembly and the terminal 14 (see Fig. 22). The energy storage device 10 of the present embodiment includes a pair of terminals 14, which are disposed at an end portion on one side of the energy storage device 10 in the Z-axis direction (the upper side in Fig. 22) and spaced apart in the Y-axis direction.

In the electrode assembly, positive electrode plates and negative electrode plates are alternately stacked with separators interposed therebetween. In the electrode assembly, lithium ions move between the positive electrode plate and the negative electrode plate, thereby charging and discharging the energy storage device 10.

The case 11 includes a case body 12 having an opening at end portion on one side in the Z-axis direction, and a plate-shaped lid plate 13 that closes the opening of the case body 12. The case body 12 has a rectangular cylindrical shape (that is, a bottomed rectangular cylindrical shape) with a closed end portion on the other side in the Z-axis direction (the lower side in Fig. 22), and the case 11 has a rectangular parallelepiped shape (six-sided shape).

Specifically, the case body 12 includes a plate-shaped closing portion 121 and a cylindrical body portion (peripheral wall) 122 extending from the peripheral edge of the closing portion 121.

The closing portion 121 is a portion that is located at the lower end of the case body 12 when the case body 12 is placed with the opening facing upwards (that is, it becomes the bottom wall of the case body 12 when the opening faces upwards). The closing portion 121 has a rectangular shape that is elongated in the Y-axis direction when viewed in the Z-axis direction.

The body portion 122 has a rectangular cylindrical shape, more specifically, a flattened rectangular cylindrical shape. The body portion 122 includes a pair of long wall portions 123 extending from the long sides at the peripheral edge of the closing portion 121, and a pair of short wall portions 124 extending from the short sides at the peripheral edge of the closing portion 121. In the body portion 122, the short wall portion 124 connects the end portions of the pair of long wall portions 123 facing each other in the X-axis direction, thereby forming the body portion 122 in a rectangular cylindrical shape.

The lid plate 13 is a plate-shaped member that closes the opening of the case body 12. The lid plate 13 includes a lid plate main body 131 having a rectangular plate shape that is elongated in the Y-axis direction, and a gas release valve 132 disposed on the lid plate main body 131.

The gas release valve 132 discharges gas to the outside when gas is generated within the case 11 and the pressure within the case 11 exceeds a predetermined value. The gas release valve 132 of the present embodiment is disposed at the center of the lid plate main body 131 in the Y-axis direction. The gas release valve 132 of the present embodiment is circular when viewed in the Z-axis direction.

The lid plate 13 configured as described above is joined to the case body 12 with the peripheral edge portion of the lid plate 13 overlapping the peripheral edge portion of the opening of the case body 12, thereby forming the case 11.

The pair of terminals 14 are portions that are electrically connected to terminals 14 of other energy storage devices 10 or to an external device or the like. The terminal 14 is formed of a member having conductivity. The terminal 14 is formed of a metal material having high weldability, such as an aluminum-based metal material, such as aluminum or an aluminum alloy, or a copper-based metal material, such as copper or a copper alloy.

The pair of terminals 14 are disposed on both end portions of the lid plate 13 in the Y-axis direction. That is, the pair of terminals 14 are disposed on the lid plate 13 with the gas release valve 132 interposed therebetween.

The energy storage devices 10 described above have a flattened rectangular parallelepiped shape, and the plurality of energy storage devices 10 is arranged in the Z-axis direction with the wide faces (long wall portions 123) of the cases 11 facing each other with adjacent members 2 interposed therebetween. At this time, the gas release valves 132 of the energy storage devices 10 are arranged in a row in the X-axis direction. One terminal 14 and the other terminal 14 of the energy storage device 10 are arranged in the X-axis direction with the gas release valve 132 interposed therebetween.

The plurality of adjacent members 2 has insulating properties and is disposed between the energy storage devices 10 arranged in the X-axis direction, or between the energy storage device 10 and a member (in the example of the present embodiment, the terminal portion 31, which is a part of the holding portion 3) arranged in the X-axis direction relative to the energy storage device 10. The plurality of adjacent members 2 is formed of a resin having insulating properties. The adjacent member 2 forms a flow path R between the adjacent energy storage device 10 and the adjacent member 2, through which a temperature adjusting fluid (gas such as air in the example of the present embodiment) can flow. The plurality of adjacent members 2 includes a plurality of types of adjacent members 2A, 2B, and 2D.

Specifically, the plurality of adjacent members 2 includes a plurality of intermediate adjacent members (second adjacent members) 2A and 2B disposed between adjacent energy storage devices 10, and a plurality of end adjacent members (first adjacent members) 2D disposed between the energy storage devices 10 and the holding portion 3 (more specifically, the terminal portion 31). The plurality of intermediate adjacent members includes a first intermediate adjacent member 2A that is not fixed to the holding portion 3 and a second intermediate adjacent member 2B that is fixed to the holding portion 3. That is, the energy storage apparatus 1 includes, as the adjacent members 2, a first intermediate adjacent member 2A, a second intermediate adjacent member 2B, and an end adjacent member 2D. The energy storage apparatus 1 of the present embodiment may include a plurality of first intermediate adjacent members 2A, one second intermediate adjacent member 2B, and two (a pair) of end adjacent members 2D. The plurality of first intermediate adjacent members 2A is disposed in the apparatus main body A between the energy storage devices 10 except between the energy storage devices 10 between which the second intermediate adjacent members 2B are disposed.

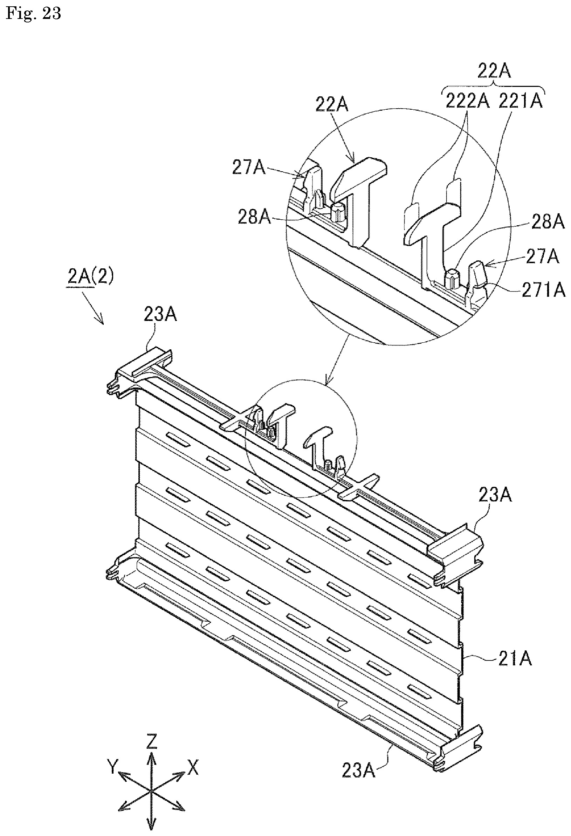

As also illustrated in Fig. 23, the plurality of first intermediate adjacent members (second adjacent members) 2A includes a first intermediate main body portion (second main body portion) 21A that overlaps the energy storage device 10 when viewed in the X-axis direction, and a first intermediate locking piece (locking piece) 22A that locks the duct portion 6 to the first intermediate main body portion 21A. In the present embodiment, locking means that two portions abut (contact) with each other, so that one portion suppresses the movement of the other. The first locking piece 22A is fixed to the duct portion 6 by abutting to engage with the locked portion 65 of the duct portion 6 by hooking or the like.

Specifically, the first intermediate adjacent member 2A includes a first intermediate main body portion 21A that is located between adjacent energy storage devices 10 in the X-axis direction and extends in a planar direction perpendicular to the X-axis direction, and a first intermediate locking piece 22A that extends (protrudes) from the first intermediate main body portion 21A toward one side in the Z-axis direction and locks the duct portion 6 to the first intermediate main body portion 21A.

The first intermediate adjacent member 2A includes a first intermediate locking portion 27A that extends (protrudes) from the first intermediate main body portion 21A toward one side in the Z-axis direction and locks the plate portion C, a positioning protrusion 28A that extends (protrudes) from the first intermediate main body portion 21A toward one side in the Z-axis direction and positions the plate portion C, and a first intermediate restricting portion 23A that restricts movement of the energy storage device 10 adjacent to the first intermediate main body portion 21A relative to the first intermediate main body portion 21A.

The first intermediate adjacent member 2A of the present embodiment includes two (a pair) of first intermediate locking pieces 22A, two (a pair) of first intermediate locking portions 27A, and two (a pair) of positioning protrusions 28A. The plurality of first intermediate adjacent members 2A forms flow paths R between adjacent energy storage devices 10, through which a temperature adjusting fluid can flow.

The first intermediate main body portion 21A is a portion that faces the long wall portion 123 of the case 11 of the energy storage device 10 in a state of partial abutment therewith. The first intermediate main body portion 21A cooperates with an adjacent energy storage device 10 to form a flow path R between the energy storage device 10 and the first intermediate main body portion 21A, through which a temperature adjusting fluid can flow. In the present embodiment, the first intermediate main body portion 21A has a rectangular plate shape with a size corresponding to the energy storage device 10 when viewed in the X-axis direction, and its crosssectional shape along an X-Z plane (a plane including the X-axis direction and the Z-axis direction) is a rectangular waveform.

The two first intermediate locking pieces 22A extend from positions spaced apart in the Y-axis direction at end portion on one side of the first intermediate main body portion 21A in the Z-axis direction. These two first intermediate locking pieces 22A extend in the Z-axis direction at positions adjacent to the duct portion 6 in the Y-axis direction. The two first intermediate locking pieces 22A are plate-shaped with the Y-axis direction as the thickness direction (in other words, plate-shaped along the X-Z plane). The interval between these two first intermediate locking pieces 22A in the Y-axis direction corresponds to the dimension of the duct portion 6 in the Y-axis direction.

In detail, the two first intermediate locking pieces 22A include a locking piece main body 221A extending from the first intermediate main body portion 21A along the duct portion 6 in the Z-axis direction (the opposing direction between the gas release valve 132 and the duct portion 6), and a locking portion 222A that engages with the duct portion 6 (more specifically, a duct portion main body 60 to be described later).

The locking piece main body 221A is a strip-shaped portion extending straight in the Z-axis direction from the first intermediate main body portion 21A. The locking piece main body 221A of the present embodiment is in the form of a strip having a constant dimension in the X-axis direction at a position in the Z-axis direction.

The locking portion 222A is a portion of the locking piece main body 221A that extends in the X-axis direction (the extending direction of the duct portion 6) from a position spaced apart on one side in the Z-axis direction from the first intermediate main body portion 21A. The locking portion 222A of the present embodiment extends from the locking piece main body 221A to one side and the other side in the X-axis direction. That is, the first intermediate locking piece 22A includes two locking portions 222A.

The two first intermediate locking portions 27A extend from positions spaced apart in the Y-axis direction at an end portion on one side of the first intermediate main body portion 21A in the Z-axis direction. These two first intermediate locking portions 27A are disposed at an interval in the Y-axis direction with the two first intermediate locking pieces 22A positioned therebetween. The two first intermediate locking portions 27A include, at their tips, hook portions 271A whose dimension in the Y-axis direction increases outwardly as they approach the first intermediate main body portion 21A when viewed in the X-axis direction. The plate portion C is fixed to the apparatus main body A by the hook portion 271A being hooked (engaged) with a predetermined portion of the plate portion C.

The two positioning protrusions 28A extend from positions spaced apart in the Y-axis direction at the end portion on one side of the first intermediate main body portion 21A in the Z-axis direction. The positioning protrusion 28A is disposed between the first intermediate locking piece 22A and the first intermediate locking portion 27A corresponding to the first intermediate locking piece 22A. The positioning protrusions 28A are inserted into corresponding holes in the plate portion C to position the plate portion C relative to the apparatus main body A.

The first intermediate restricting portion 23A extends in the X-axis direction from a corner portion of the rectangular first intermediate main body portion 21A and abuts the energy storage device 10 (more specifically, the case 11) adjacent to the first intermediate main body portion 21A from the outside in a Y-Z plane direction, thereby restricting the relative movement of the energy storage device 10 in the Y-Z plane direction with respect to the first intermediate main body portion 21A. The first intermediate restricting portion 23A of the present embodiment extends from the first intermediate main body portion 21A toward one side and the other side in the X-axis direction.

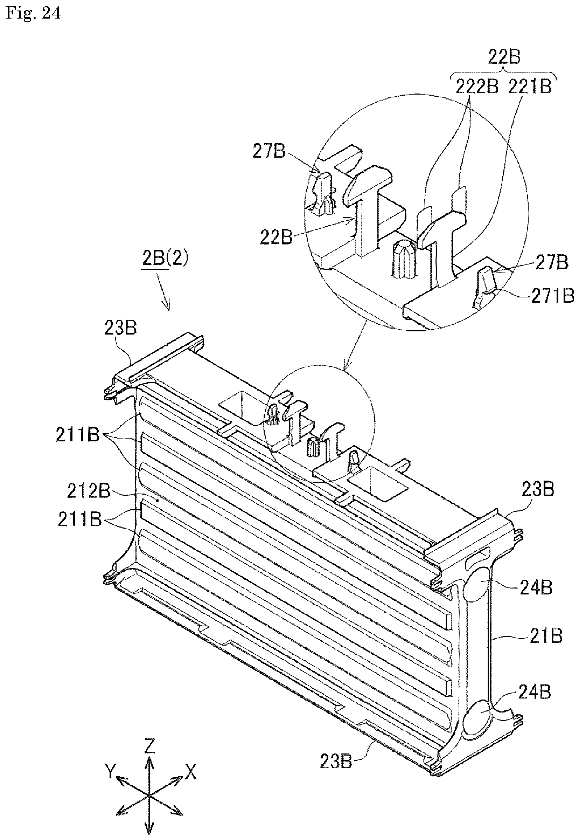

As also illustrated in Fig. 24, the second intermediate adjacent member 2B includes a second intermediate main body portion (second main body portion) 21B, and a second intermediate locking piece (locking piece) 22B that locks the duct portion 6 to the second intermediate main body portion 21B.

Specifically, the second intermediate adjacent member 2B includes a second intermediate main body portion 21B that is located between adjacent energy storage devices 10 in the X-axis direction and extends in a planar direction perpendicular to the X-axis direction, and a second intermediate locking piece (locking piece) 22B that extends (protrudes) from the second intermediate main body portion 21B toward one side in the Z-axis direction and locks the duct portion 6 to the second intermediate main body portion 21B.

The second intermediate adjacent member 2B includes a second intermediate locking portion 27B that extends (protrudes) from the second intermediate main body portion 21B toward one side in the Z-axis direction and locks the plate portion C, a second intermediate restricting portion 23B that restricts the movement of the energy storage device 10 adjacent to the second intermediate main body portion 21B relative to the second intermediate main body portion 21B, and a second fixing portion 24B used to fix the second intermediate adjacent member 2B to the holding portion 3.

The second intermediate adjacent member 2B of the present embodiment includes two (a pair) of second intermediate locking pieces 22B and two (a pair) of second intermediate locking portions 27B. The second intermediate adjacent member 2B forms a flow path R between adjacent energy storage devices 10, through which a temperature adjusting fluid can flow.

The second intermediate main body portion 21B is a portion that faces the long wall portion 123 of the case 11 of the energy storage device 10 in a state of partial abutment therewith. The second intermediate main body portion 21B cooperates with an adjacent energy storage device 10 to form a flow path R between the energy storage device 10 and the second intermediate main body portion 21B, through which a temperature adjusting fluid can flow. In the present embodiment, the dimension of the second intermediate main body portion 21B in the X-axis direction is larger than the dimension of the first intermediate main body portion 21A in the X-axis direction (that is, it is thick). The second intermediate main body portion 21B has a rectangular plate shape with a size corresponding to that of the energy storage device 10 when viewed in the X-axis direction. The second intermediate main body portion 21B has a plurality of protruding strips 211B extending in the Y-axis direction and arranged at intervals in the Z-axis direction. The plurality of protruding strips 211B protrudes from a surface 212B of the second intermediate main body portion 21B facing the energy storage devices 10.

The two second intermediate locking pieces 22B extend from positions spaced apart in the Y-axis direction at end portion on one side of the second intermediate main body portion 21B in the Z-axis direction. The interval between these two second intermediate locking pieces 22B in the Y-axis direction corresponds to the dimension of the duct portion 6 in the Y-axis direction, similarly to the two first intermediate locking pieces 22A of the first intermediate adjacent member 2A. Accordingly, the second intermediate locking piece 22B extends along the duct portion 6 in the Z-axis direction. The configuration of these two second intermediate locking pieces 22B is the same as the configuration of the first intermediate locking piece 22A. That is, the second intermediate locking piece 22B includes a locking piece main body 221B and a locking portion 222B. The dimension of the second intermediate locking piece 22B in the Z-axis direction is the same as the dimension of the first intermediate locking piece 22A of the first intermediate adjacent member 2A in the Z-axis direction.

The two second intermediate locking portions 27B extend from positions spaced apart in the Y-axis direction at an end portion on one side of the second intermediate main body portion 21B in the Z-axis direction. These two second intermediate locking portions 27B are disposed at an interval in the Y-axis direction with the two second intermediate locking pieces 22B positioned therebetween, similarly to the two first intermediate locking portions 27A of the first intermediate adjacent member 2A. The configuration of the second intermediate locking portion 27B is the same as the configuration of the first intermediate locking portion 27A. That is, the second intermediate locking portion 27B includes a hook portion 271B at its tip.

The second intermediate restricting portion 23B extends in the X-axis direction from a corner portion of the rectangular second intermediate main body portion 21B and abuts the energy storage device 10 (more specifically, the case 11) adjacent to the second intermediate main body portion 21B from the outside in the Y-Z plane direction, thereby restricting the relative movement of the energy storage device 10 in the Y-Z plane direction with respect to the second intermediate main body portion 21B. The second intermediate restricting portions 23B of the present embodiment extend from the second intermediate main body portion 21B toward one side and the other side in the X-axis direction.

The second fixing portion 24B is disposed at the end portion of the second intermediate main body portion 21B in the Y-axis direction. The plurality of second fixing portions 24B engages with the first fixing portions 4 to fix the second intermediate adjacent member 2B to the holding portion 3. The second fixing portion 24B of the present embodiment is an insert nut. The first fixing portion 4 of the present embodiment is a bolt, and in a state where it is inserted through the holding portion 3, it is screwed into the second fixing portion 24B, thereby fastening (fixing) the holding portion 3 to the second intermediate adjacent member 2B.

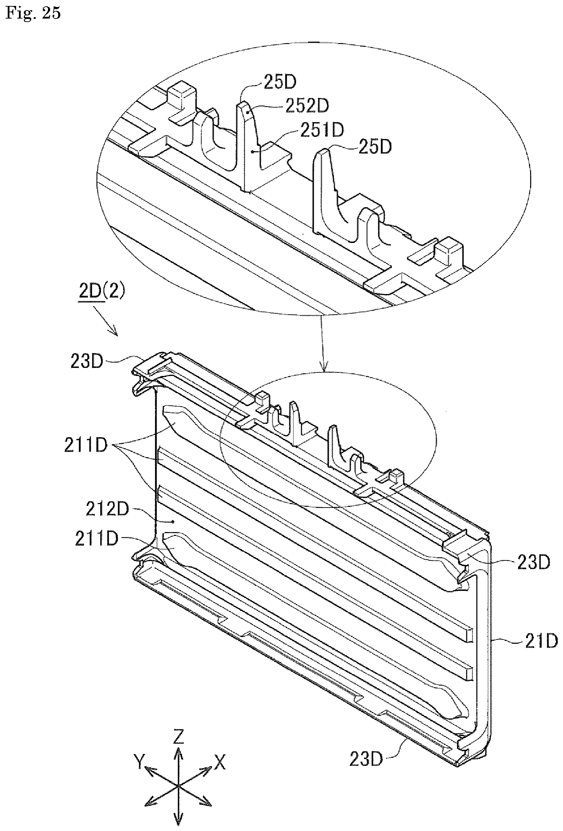

As also illustrated in Fig. 25, the two end adjacent members 2D include an end main body portion (first main body portion) 21D that overlaps the energy storage device 10 when viewed in the X-axis direction, and a pair of guide portions 25D extending from the end main body portion 21D in the Z-axis direction. The two end adjacent members 2D include end restricting portions 23D that restrict movement of the energy storage devices 10 adjacent to the end main body portion 21D relative to the end main body portion 21D. These two end adjacent members 2D form flow paths R between adjacent energy storage devices 10, through which a temperature adjusting fluid can flow.

The end main body portion 21D is a portion that faces the long wall portion 123 of the energy storage device 10 in a state of partial abutment therewith. Similarly to the first intermediate main body portion 21A of the first intermediate adjacent member 2A and the second intermediate main body portion 21B of the second intermediate adjacent member 2B, the end main body portion 21D also cooperates with an adjacent energy storage device 10 to form a flow path R between the energy storage device 10 and the end main body portion 21D, through which a temperature adjusting fluid can flow. The end main body portion 21D of the present embodiment has a rectangular plate shape with a size corresponding to that of the energy storage device 10 when viewed in the X-axis direction. The end main body portion 21D has a plurality of protruding strips 211D extending in the Y-axis direction and arranged at intervals in the Z-axis direction. The plurality of protruding strips 211D protrudes from a surface 212D of the end main body portion 21D facing the energy storage devices 10.

The end restricting portion 23D extends in the X-axis direction from a corner portion of the rectangular end main body portion 21D and abuts the energy storage device 10 (more specifically, the case 11) adjacent to the end main body portion 21D from the outside in the Y-Z plane direction, thereby restricting the relative movement of the energy storage device 10 in the Y-Z plane direction with respect to the end main body portion 21D. The end restricting portion 23D of the present embodiment extends from the end main body portion 21D toward the energy storage devices 10 in the X-axis direction.

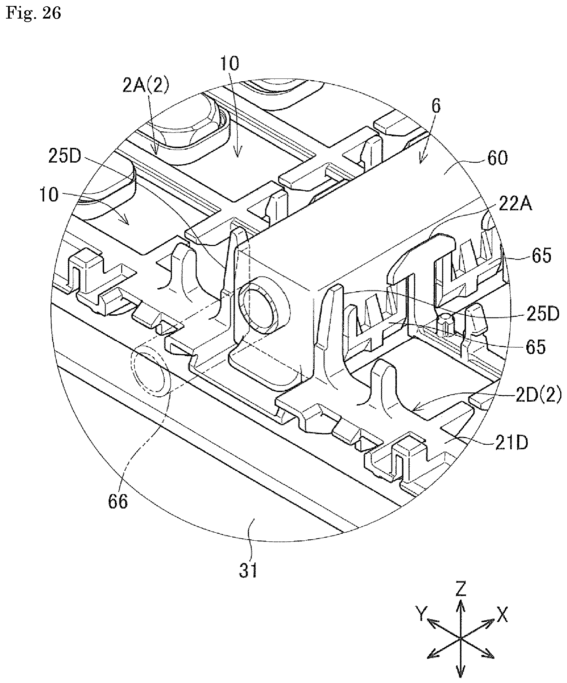

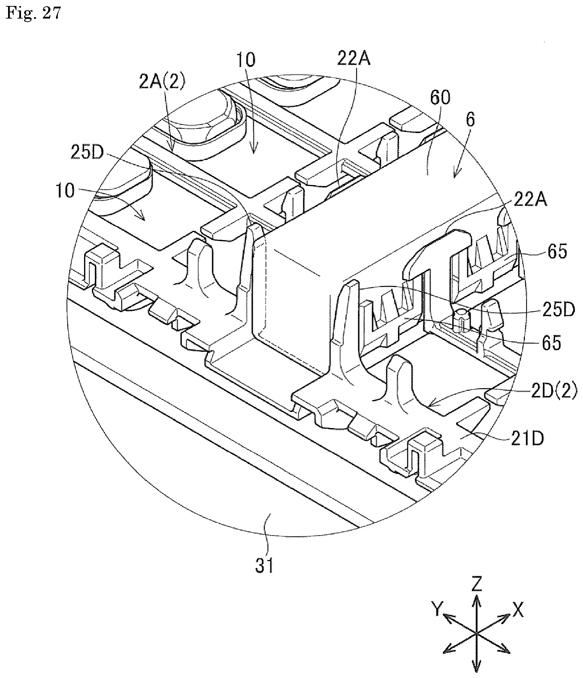

As also illustrated in Figs. 26 and 27, the pair of guide portions 25D extend along the duct portion 6 on both sides of the duct portion 6 in the Y-axis direction. The pair of guide portions 25D are disposed at an interval corresponding to the dimension of the duct portion 6 in the Y-axis direction, and the guide portions 25D extend in the Z-axis direction along the duct portion 6 from the end main body portion 21D.

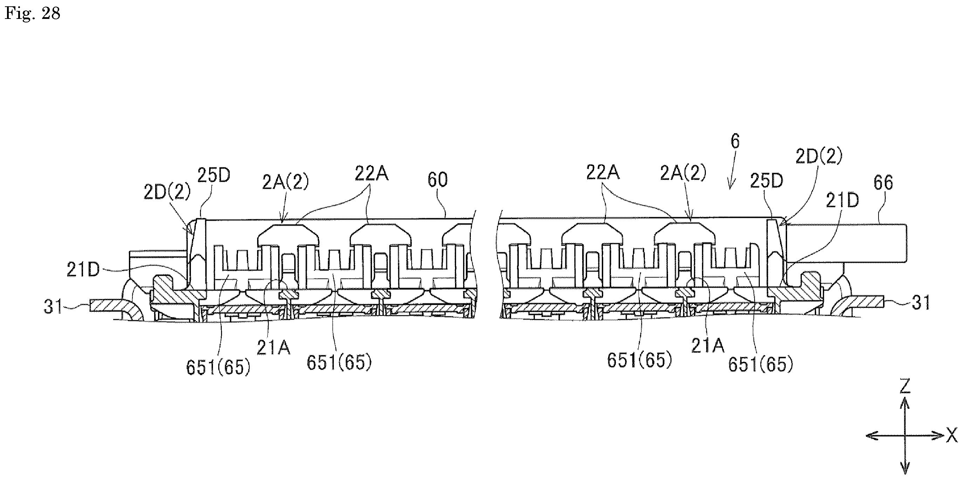

As also illustrated in Fig. 28, these guide portions 25D are longer in the Z-axis direction than the first intermediate locking pieces 22A of the first intermediate adjacent member 2A. In the Z-axis direction, since the dimensions of the first intermediate locking piece 22A of the first intermediate adjacent member 2A and the dimensions of the second intermediate locking piece 22B of the second intermediate adjacent member 2B are the same, the guide portion 25D is longer than the second intermediate locking piece 22B of the second intermediate adjacent member 2B. In the Z-axis direction, the dimension of the guide portion 25D is preferably smaller than the dimension of the duct portion 6 (more specifically, a duct portion main body 60 to be described later).

The dimension (thickness) of the guide portion 25D in the Y-axis direction is larger than the dimension (thickness) of the first intermediate locking piece 22A of the first intermediate adjacent member 2A in the Y-axis direction and the dimension (thickness) of the second intermediate locking piece 22B of the second intermediate adjacent member 2B in the Y-axis direction. Accordingly, the bending rigidity of the guide portion 25D is greater than the bending rigidity of the first intermediate locking piece 22A and the second intermediate locking piece 22B. In detail, the bending rigidity in the direction in which the interval between the tips of a pair of guide portions 25D increases (Y-axis direction) is greater than the bending rigidity in the direction in which the interval between the tips of the first intermediate locking piece 22A of the first intermediate adjacent member 2A increases (Y-axis direction), and is also greater than the bending rigidity in the direction in which the interval between the tips of the second intermediate locking piece 22B of the second intermediate adjacent member 2B increases (Y-axis direction).

Specifically, the guide portion 25D has a guide surface 251D that guides the duct portion 6 to the attachment position when the duct portion 6 is attached to the apparatus main body A, and a leading surface 252D that makes it easier to insert the duct portion 6 between a pair of guide portions 25D (that is, between a pair of guide surfaces 251D) (see Fig. 25).

The guide surface 251D is a strip-shaped surface that extends in an X-Z plane direction and is elongated in the Z-axis direction. The leading surface 252D is disposed at the tip of the guide portion 25D, and is a surface that is positioned outward in the Y-axis direction (in a direction away from the center position in the Y-axis direction of the end adjacent member 2D) as it progresses to one side in the Z-axis direction, and is a surface that is inclined with respect to the guide surface 251D. The guide surface 251D and the leading surface 252D are connected in the Z-axis direction.

As illustrated in Figs. 18 to 22, the holding portion 3 holds the layered product D by surrounding the periphery of the layered product D. That is, the holding portion 3 surrounds the periphery of the plurality of energy storage devices 10 and the plurality of adjacent members 2, thereby holding the plurality of energy storage devices 10 and the plurality of adjacent members 2 together. The holding portion 3 is made of metal, resin, or the like.

Specifically, the holding portion 3 includes a pair of terminal portions 31 disposed on both sides of the layered product D in the X-axis direction, an extension portion 32 extending in the X-axis direction along the layered product D at a position aligned with the layered product D in the Y-axis direction, and a connecting portion 33 connecting the terminal portions 31 and the extension portion 32. The holding portion 3 of the present embodiment includes a pair of extension portions 32 disposed at an interval in the Y-axis direction such that the layered product D is located between them.

The pair of terminal portions 31 are disposed to interpose the end adjacent member 2D between the energy storage devices 10 disposed at the ends in the X-axis direction. Specifically, the pair of terminal portions 31 include a terminal end main body 311 extending along the Y-Z plane direction, and a flange portion 313 extending from the terminal end main body 311 in a direction away from the energy storage device 10 in the X-axis direction.

The terminal end main body 311 has a rectangular shape with a size corresponding to that of the energy storage device 10 when viewed in the X-axis direction. Specifically, the terminal end main body 311 has a rectangular shape that is elongated in the Y-axis direction, and has a plurality of through holes 312 disposed at intervals in the Z-axis direction at both end portions in the Y-axis direction (see Fig. 22). The flange portion 313 extends, in the X-axis direction, from an end portion on one side of the terminal end main body 311 in the Z-axis direction, and also extends in the Y-axis direction.

The pair of extension portions 32 include an extension portion main body 320 that faces the short wall portion 124 of the energy storage device 10 via the insulator 5, a first piece portion 321 that extends from an end portion on one side of the extension portion main body 320 in the Z-axis direction along the lid plate 13 of the energy storage device 10 in the Y-axis direction and also extends in the X-axis direction, a second piece portion 322 that extends from an end portion on the other side of the extension portion main body 320 in the Z-axis direction along the closing portion 121 of the energy storage device 10 in the Y-axis direction and also extends in the X-axis direction, and a pair of third piece portions 323 that extend from an end portion of the extension portion main body 320 in the X-axis direction along the terminal portion 31 in the Y-axis direction and also extend in the Z-axis direction.

The extension portion main body 320 is a plate-shaped portion extending along the short wall portion 124 of the energy storage device 10, and has a plurality of ventilation openings 3201 penetrating in the Y-axis direction to allow temperature adjusting fluid to flow in or out of the flow path R, and a plurality of first fixing holes 3202 penetrating in the Y-axis direction at positions corresponding to the second fixing portion 24B of the second intermediate adjacent member 2B. The first fixing portion 4 is inserted into the first fixing hole 3202.

The first piece portion 321 is a strip-shaped portion that is elongated in the X-axis direction, and the second piece portion 322 is also a strip-shaped portion that is elongated in the X-axis direction. The width of the portion of the second piece portion 322 excluding both end portions in the X-axis direction (the dimension in the Y-axis direction) is larger than the width of the first piece portion 321. The pair of third piece portions 323 have a plurality of second fixing holes 3231 disposed at intervals in the Z-axis direction. The second fixing hole 3231 is disposed at a position corresponding to the through hole 312 of the terminal portion 31.

The plurality of connecting portions 33 fixes the terminal portion 31 and the extension portion 32 together while being inserted through the through hole 312 of the terminal portion 31 and the second fixing hole 3231 of the extension portion 32 (more specifically, the third piece portion 323). The connecting portion 33 of the present embodiment includes a bolt 331 and a nut 332.

The insulator 5 has insulating properties. The insulator 5 is disposed between the extension portion 32 and the layered product D. Specifically, the energy storage apparatus 1 includes a pair of insulators 5, and the insulators 5 cover the areas of the extension portions 32 that face the plurality of energy storage devices 10. In this way, the insulator 5 provides insulation between extension portion 32 and the plurality of energy storage devices 10. A ventilation area 51 having a size and a shape corresponding to the ventilation opening 3201 of the extension portion main body 320 is provided at a position corresponding to the ventilation opening 3201 of the extension portion main body 320 in the insulator 5.

The seal portion 7 is a portion or a member disposed between the apparatus main body A and the duct portion 6 to suppress gas leakage from between the apparatus main body A and the duct portion 6, and has a seal portion through hole 71 that communicates between the gas release valve 132 and the guide space (the internal space of the duct portion 6) S (see Fig. 19). The seal portion 7 extends in the X-axis direction at a position corresponding to the gas release valve 132 in the Y-axis direction at an end portion on one side of the apparatus main body A in the Z-axis direction. The seal portion 7 of the present embodiment is formed of a foam such as a fluorine-based, silicone-based, or urethane-based resin, and provides a seal between the apparatus main body A and the duct portion 6.

Specifically, the seal portion 7 is a strip-shaped member whose width direction is the Y-axis direction and whose longitudinal direction is the X-axis direction, and has a seal portion through hole 71 at a position corresponding to the gas release valve 132 of the energy storage device 10 (more specifically, at a position overlapping the gas release valve 132 when viewed in the Z-axis direction). That is, the seal portion 7 has a plurality of seal portion through holes 71, and the plurality of seal portion through holes 71 is arranged in a row at intervals in the X-axis direction in the seal portion 7.

The width (dimension in the Y-axis direction) of the seal portion 7 of the present embodiment is a size corresponding to that of the duct portion 6. The seal portion through hole 71 has a shape and a size corresponding to the gas release valve 132, and the seal portion through hole 71 of the present embodiment is a circular hole having the same or approximately the same diameter as the gas release valve 132.

The duct portion 6 is disposed along the X-axis direction while facing the gas release valve 132 in the Z-axis direction. As illustrated in Figs. 18 to 21, the duct portion 6 of the present embodiment extends along the energy storage devices 10 from one end of the energy storage devices 10 in the X-axis direction to the other end of the energy storage devices 10.

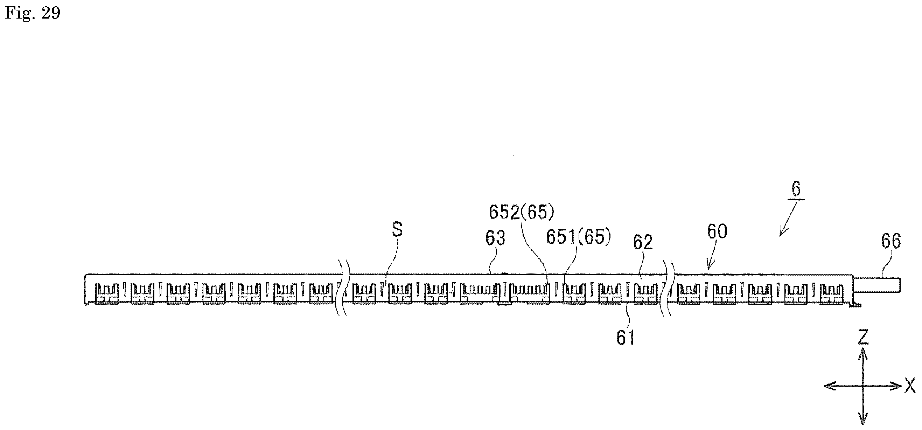

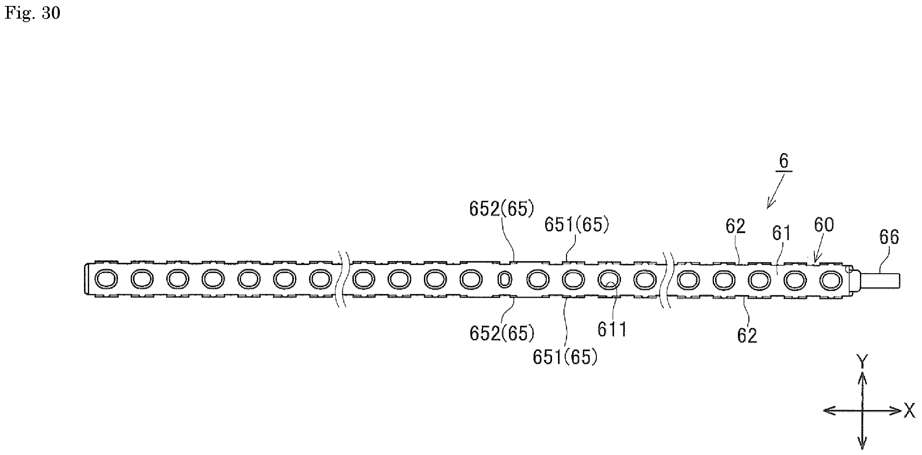

Specifically, as also illustrated in Figs. 29 and 30, the duct portion 6 includes a duct portion main body 60 that guides gas when the gas is discharged from the gas release valve 132 of the energy storage device 10, and a locked portion 65 that engages with the intermediate locking pieces 22A and 22B of the intermediate adjacent members 2A and 2B (in the example of the present embodiment, where the intermediate locking pieces 22A and 22B are hooked). The duct portion 6 includes a joint portion 66 to which another member is connected and which is capable of releasing gas within the duct portion main body 60 (within the guide space S) to the other member. The duct portion 6 of the present embodiment is made of resin such as polybutylene terephthalate or glass fiber blended resin (polybutylene terephthalate-glass fiber).

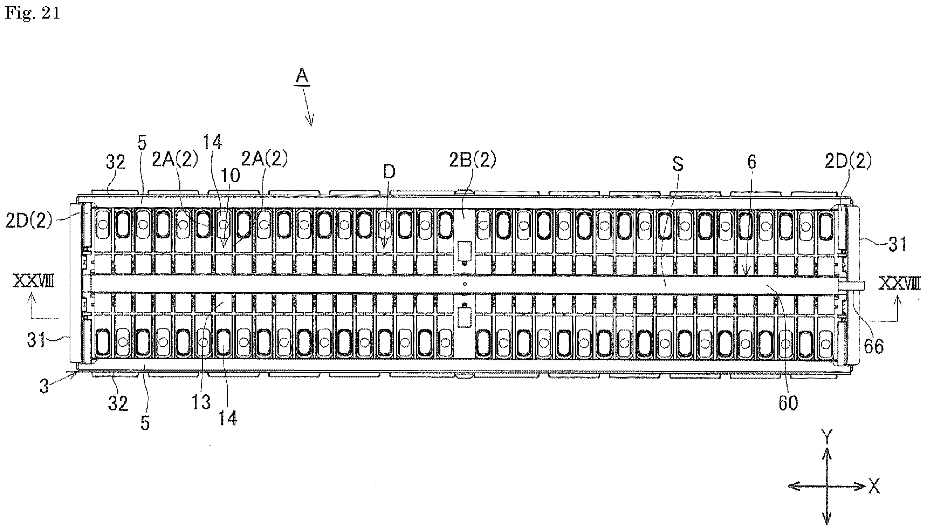

The duct portion main body 60 is a hollow cylindrical portion that extends in the X-axis direction and has a guide space S therein. The duct portion main body 60 of the present embodiment extends from an end portion on one side (left side in Fig. 18) of the apparatus main body A in the X-axis direction to an end portion on the other side (right side in Fig. 18), and the end portion on one side is closed. The duct portion main body 60 is disposed at a position overlapping the gas release valve 132 of the energy storage device 10 when viewed in the Z-axis direction (see Fig. 21).

Specifically, the duct portion main body 60 includes a bottom wall portion 61 facing the apparatus main body A (a plurality of energy storage devices 10), a pair of side wall portions 62 extending from both ends of the bottom wall portion 61 in the Y-axis direction to one side in the Z-axis direction, and a top wall portion 63 connecting end portions on one side of the pair of side wall portions 62 in the Z-axis direction, and the space surrounded by the bottom wall portion 61, the pair of side wall portions 62, and the top wall portion 63 forms a guide space S that can guide gas discharged from the gas release valve 132 to the joint portion 66.

The bottom wall portion 61 is a strip-shaped portion whose width direction is the Y-axis direction and whose longitudinal direction is the X-axis direction, and is a portion of the duct portion main body 60 that interposes the seal portion 7 between itself and the apparatus main body A. The bottom wall portion 61 has a duct portion through hole 611 that communicates between the seal portion through hole 71 and the guide space S at a position corresponding to the seal portion through hole 71 of the seal portion 7 (in other words, at a position corresponding to the gas release valve 132 of the energy storage device 10). That is, the bottom wall portion 61 has a plurality of duct portion through holes 611, and the plurality of duct portion through holes 611 is arranged in a row at intervals in the X-axis direction on the bottom wall portion 61.

The pair of side wall portions 62 are strip-shaped portions extending in the X-Z plane direction, specifically, strip-shaped portions with the Z-axis direction as the width direction and the X-axis direction as the longitudinal direction. A plurality of locked portions 65 is disposed on the pair of side wall portions 62 to protrude outward in the Y-axis direction. The plurality of locked portions 65 is a portion where the intermediate locking pieces 22A and 22B of the intermediate adjacent members 2A and 2B engage (in the example of the present embodiment, hook) to fix the duct portion 6 to the intermediate adjacent members 2A and 2B (that is, the apparatus main body A), and is disposed at intervals in the X-axis direction. Specifically, the plurality of locked portions 65 is disposed at positions corresponding to the duct portion through holes 611 of the bottom wall portion 61 in the X-axis direction. In the present embodiment, the plurality of locked portions 65 includes two types of locked portions (a first locked portion 651 and a second locked portion 652), and the dimension of the first locked portion 651 in the X-axis direction is smaller than the dimension of the second locked portion 652 in the X-axis direction.

The joint portion 66 is a portion that extends in the X-axis direction from an end portion on one side of the duct portion main body 60 in the X-axis direction. The joint portion 66 of the present embodiment is cylindrical and communicates between the guide space S and the external space.

In the duct portion 6 configured as described above, when it is attached to the apparatus main body A with the seal portion 7 interposed between the duct portion 6 and the apparatus main body A, the locking piece main bodies 221A and 221B of the corresponding intermediate adjacent members 2A and 2B are located between adjacent locked portions 65 (the first locked portion 651 and the second locked portion 652) spaced apart in the X-axis direction, and the locking portions 222A and 222B extending from the locking piece main bodies 221A and 221B abut (engage) with the locked portions 65 adjacent to the locking piece main bodies 221A and 221B in the X-axis direction from one side in the Z-axis direction. Accordingly, the duct portion 6 is locked to the apparatus main body A (the intermediate adjacent members 2A and 2B) (see Figs. 26 to 28).

Referring back to Figs. 18 and 19, the plate portion C includes a plurality of bus bars B, a plate portion main body 8 that accommodates the plurality of bus bars B, and a harness 9 that has a plurality of electric wires connected to the bus bars B. In Fig. 19, some of the bus bars B among the plurality of bus bars B disposed within the plate portion C are illustrated outside the plate portion C in order to describe the configuration.

The plurality of bus bars B is a plate-shaped member having conductivity such as metal, and connects terminals 14 of different energy storage devices 10 to each other. This plurality of bus bars B connects terminals 14 of adjacent energy storage devices 10 to each other, thereby providing electrical continuity therebetween. The bus bar B of the present embodiment is welded to the terminal 14.

The harness 9 includes a cable portion 91 having a plurality of electric wires, and a connector 92 disposed at an end portion of the cable portion 91. An end portion on the other side of the electric wire of the cable portion 91 is connected to the bus bar B or the like, and an end portion on one side of the electric wire is connected to the connector 92.

The cable portion 91 is formed by bundling at least a part of a plurality of electric wires whose end portion on the other side is connected to the bus bar B or the like. The cable portion 91 is disposed on the plate portion main body 8 with an end portion on one side protruding from the plate portion main body 8 in the X-axis direction. The connector 92 is attached to the tip of the cable portion 91 in the protruding direction. The connector 92 of the present embodiment is a multi-core connector, and two connectors are disposed.

The plate portion main body 8 is made of an insulating material such as resin, and is a plate-shaped portion or member that covers the surface of the apparatus main body A on which the terminals 14 are arranged. The plate portion main body 8 is a plate-shaped member whose dimension in the Z-axis direction is smaller than its dimensions in the X-axis direction and Y-axis direction, and has a rectangular shape with a size corresponding to that of the apparatus main body A when viewed in the Z-axis direction. The plate portion main body 8 includes a bus bar accommodating portion 81 that accommodates the bus bar B connected to the terminal 14 of the energy storage device 10, an electric wire arrangement portion 82 in which the harness 9 is disposed, and a plurality of lid portions 83. The plate portion main body 8 includes a duct arrangement portion 85 in which a part of the layered product D (in the example of the present embodiment, the gas release valve 132 of the energy storage device 10) is exposed when viewed in a direction from the plate portion C toward the apparatus main body A (that is, when viewed in one side to the other side in the Z-axis direction) in a state where the duct portion 6 is not disposed.

The plate portion main body 8 of the present embodiment includes two bus bar accommodating portions 81 disposed at positions interposing the duct arrangement portion 85 in the Y-axis direction, and a plurality of connecting portions 84 extending in the Y-axis direction and connecting the two bus bar accommodating portions 81, and the plurality of connecting portions 84 is disposed at intervals in the X-axis direction.

The two bus bar accommodating portions 81 accommodate a plurality of bus bars B with at least one bus bar B (two in the example of the present embodiment) surrounded by a wall.

The electric wire arrangement portion 82 is a groove-shaped portion in the plate portion main body 8, and a cable portion 91 of the harness 9 is disposed inside the electric wire arrangement portion 82.

The plurality of lid portions 83 is a plate-shaped portion that openably and closably covers end openings on one side in the Z-axis direction of the wall surrounding the bus bar B in the bus bar accommodating portion 81. The lid portion 83 has a rectangular plate shape, and a part of the peripheral edge and a part of the wall surrounding the bus bar B are connected to each other.

In the energy storage apparatus 1 configured as above, the duct portion 6 is attached to the apparatus main body A as follows.

First, in a state where the duct portion 6 is inclined relative to the stacking direction (X-axis direction) of the energy storage devices 10 in the apparatus main body A such that an end portion on one side in the X-axis direction is closer to the apparatus main body A than an end portion on the other side, the end portion on one side of the duct portion 6 is pushed between a pair of guide portions 25D of the end adjacent member (one end adjacent member) 2D corresponding to that end portion of the apparatus main body A.

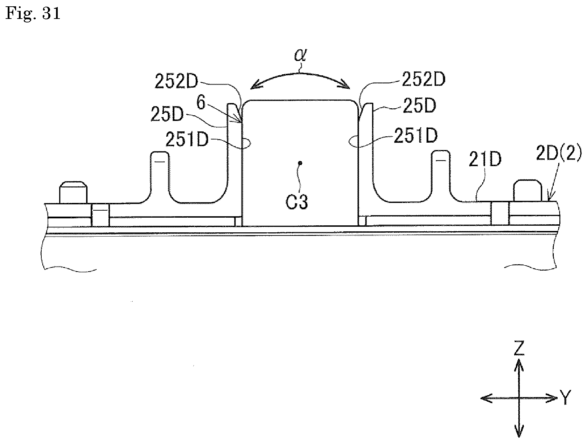

At this time, as an end portion on one side of the duct portion 6 moves toward the apparatus main body A in a state where the end portion is interposed between the guide surfaces 251D of a pair of guide portions 25D, the end portion is pushed until it abuts against the end main body portion 21D in a state where the inclination of the duct portion 6 about the central axis C3 (the inclination in the direction of arrow α in Fig. 31) is suppressed.

Subsequently, the duct portion 6 is rotated with the end portion on one side in the X-axis direction in a state of being pushed between the guide portions 25D as the rotation center such that the end portion on the other side faces toward between the pair of guide portions 25D of the other end adjacent member 2D. As a result, starting from the locked portion 65 closest to an end portion on one side in the X-axis direction, the corresponding intermediate locking pieces 22A and 22B of the first or second intermediate adjacent member 2A or 2B are caught (engaged), and an end portion on the other side is pushed between a pair of guide portions 25D of the other end adjacent member 2D, thereby attaching (fixing) the duct portion 6 to the apparatus main body A.

When the intermediate locking pieces 22A and 22B hook onto the locked portions 65 at corresponding positions, the corresponding portions of the duct portion 6 are pushed between the pair of intermediate locking pieces 22A and 22B, thereby causing the pair of intermediate locking pieces 22A and 22B to bend in a direction in which the interval in the Y-axis direction between the tips of the pair of intermediate locking pieces 22A and 22B increases (the tip portions of the pair of intermediate locking pieces 22A and 22B are pushed apart by the duct portion 6). Then, when the corresponding portions of the duct portion 6 are further pushed and the locked portion 65 passes through the locking portions 222A and 222B of the corresponding intermediate locking pieces 22A and 22B, the bending of the intermediate locking pieces 22A and 22B is released (they return to their pre-bending state), and the locking portions 222A and 222B of the intermediate locking pieces 22A and 22B abut against the locked portion 65 from one side in the Z-axis direction. Accordingly, the corresponding portions of the duct portion 6 are locked to the intermediate adjacent members 2A and 2B including the intermediate locking pieces 22A and 22B.

The energy storage apparatus 1 of the second embodiment configured as described above includes a plurality of energy storage devices 10 arranged in the X-axis direction (first direction), the plurality of energy storage devices 10 each including a gas release valve 132 disposed facing the Z-axis direction (second direction perpendicular to the first direction), a plurality of adjacent members 2 disposed between adjacent energy storage devices 10 in the X-axis direction or disposed adjacent to an endmost energy storage device 10 among the plurality of energy storage devices 10 in the X-axis direction on the outer side of the endmost energy storage device 10, and a duct portion 6 that overlaps the gas release valve 132 in the Z-axis direction. At least one adjacent member (in the example of the second embodiment, an end adjacent member (first adjacent member)) 2D among the plurality of adjacent members 2 includes an end main body portion (first main body portion) 21D that overlaps the energy storage device 10 when viewed in the X-axis direction, and a pair of guide portions 25D extending from the end main body portion 21D in the Z-axis direction, the pair of guide portions 25D extending along the duct portion 6 on both sides of the duct portion 6 in the Y-axis direction (a third direction perpendicular to each of the first direction and the second direction).

According to this configuration, when the duct portion 6 is pushed between the pair of guide portions 25D during assembly of the energy storage apparatus 1 and the like, the duct portion 6 is guided along the pair of guide portions 25D. This makes it easier to attach the duct portion 6 to the apparatus main body A.

The energy storage apparatus 1 of the second embodiment includes a plurality of energy storage devices 10 arranged in the X-axis direction (first direction), the plurality of energy storage devices 10 each including a gas release valve 132 disposed facing the Z-axis direction (second direction perpendicular to the first direction), a plurality of adjacent members 2 disposed between adjacent energy storage devices 10 in the X-axis direction or disposed adjacent to an endmost energy storage device 10 among the plurality of energy storage devices 10 in the X-axis direction on the outer side of the endmost energy storage device 10, and a duct portion 6 that overlaps the gas release valve 132 in the Z-axis direction. At least one adjacent member (in the example of the present embodiment, an end adjacent member (first adjacent member)) 2D among the plurality of adjacent members 2 includes an end main body portion (first main body portion) 21D that overlaps the energy storage device 10 when viewed in the X-axis direction, and a pair of guide portions 25D extending from the end main body portion 21D in the Z-axis direction, the pair of guide portions 25D extending along the duct portion 6 on both sides of the duct portion 6 in the Y-axis direction, and intermediate adjacent members 2A and 2B different from the end adjacent member 2D among the plurality of adjacent members 2 include a first or second intermediate main body portion (second main body portion) 21A or 21B that overlaps the energy storage device 10 when viewed in the X-axis direction, and intermediate locking pieces 22A and 22B extending from the first or second intermediate main body portion 21A or 21B, the intermediate locking pieces 22A and 22B extending in the same direction as the pair of guide portions 25D at a position adjacent to the duct portion 6 in the Y-axis direction and locking the duct portion 6. The pair of guide portions 25D are longer in the Z-axis direction than the first or second intermediate locking piece 22A or 22B of the intermediate adjacent member 2A or 2B (see Fig. 28).

According to the energy storage apparatus 1, by pushing the duct portion 6 between a pair of guide portions 25D, the duct portion 6 is guided by the pair of guide portions 25D to an arrangement position (a position where the duct portion 6 is locked to the first or second intermediate locking piece 22A or 22B of the intermediate adjacent member 2A or 2B) (see Fig. 31), making it easier to assemble the duct portion 6.

In the energy storage apparatus 1 of the second embodiment, the bending rigidity of the guide portion 25D is greater than the bending rigidity of the first or second intermediate locking piece 22A or 22B. By ensuring the bending rigidity of the guide portion 25D in this manner, the guide portion 25D is less likely to bend when the duct portion 6 is pushed between a pair of guide portions 25D, and accordingly, the duct portion 6 is more accurately guided to the locking position with the first or second intermediate locking piece 22A or 22B.

Since the guide portion 25D has a predetermined bending rigidity (bending rigidity greater than that of the first or second intermediate locking piece 22A or 22B) and the interval in the Y-axis direction between the pair of guide portions 25D corresponds to the dimension of the duct portion 6 in the Y-axis direction, when the duct portion 6 is pushed between the pair of guide portions 25D toward the apparatus main body A (end main body portion 21D), the guide surfaces 251D of the pair of guide portions 25D and the outer surfaces of the side wall portions 62 of the duct portion 6 are in surface contact, thereby suppressing the occurrence of the inclination of the duct portion 6 about the central axis C3 of the duct portion 6 (the inclination in the direction of arrow α in Fig. 31). That is, the duct portion 6 moves (is pushed) between the pair of guide portions 25D without being inclined about the central axis C3 until the duct portion 6 abuts against the end main body portion 21D.

In the energy storage apparatus 1 of the second embodiment, the end adjacent member 2D is disposed outside an endmost energy storage device 10 among the plurality of energy storage devices 10 in the X-axis direction. In this way, since the end adjacent member 2D is located outside the plurality of energy storage devices 10 in the X-axis direction, when the duct portion 6 is pushed between a pair of guide portions 25D, the end portion of the elongated duct portion 6 in the X-axis direction is guided to the arrangement position (that is, the end position of the elongated duct portion 6 is accurately positioned), thereby making it easier to assemble the duct portion 6.

The energy storage apparatus of the present invention is not limited to the second embodiment described above, and it goes without saying that various modifications can be made without departing from the gist of the present invention. The configuration of one embodiment can be added to the configuration of another embodiment, and a part of the configuration of one embodiment can be replaced with the configuration of another embodiment. Furthermore, a part of the configuration of one embodiment can be deleted.

In the energy storage apparatus 1 of the second embodiment described above, the pair of guide portions 25D are disposed on the end adjacent member 2D, but the present invention is not limited to this configuration. The pair of guide portions 25D may be disposed on one of the first intermediate adjacent member 2A and the second intermediate adjacent member 2B.

When the guide portion 25D is disposed on the first intermediate adjacent member 2A, the pair of guide portions 25D may be disposed on one first intermediate adjacent member 2A, or may be disposed on a plurality of first intermediate adjacent members 2A. When a plurality of second intermediate adjacent members 2B is disposed in the apparatus main body A, the pair of guide portions 25D may be disposed on one second intermediate adjacent member 2B, or may be disposed on a plurality of second intermediate adjacent members 2B.

In the energy storage apparatus 1 of the second embodiment described above, the first and second intermediate adjacent members 2A and 2B include the pair of intermediate locking pieces 22A and 22B, but the present invention is not limited to this configuration. The first and second intermediate adjacent members 2A and 2B may include one intermediate locking piece 22A and 22B, or may include three or more intermediate locking pieces 22A and 22B.

In the energy storage apparatus 1 of the second embodiment described above, the bending rigidity of the guide portion 25D of the end adjacent member 2D is greater than the bending rigidity of the intermediate locking pieces (the first intermediate locking piece 22A and the second intermediate locking piece 22B) of the first and second intermediate adjacent members 2A and 2B, but the present invention is not limited to this configuration. The bending rigidity of the guide portion 25D may be equal to or smaller than the bending rigidity of the intermediate locking pieces 22A and 22B.

In the energy storage apparatus 1 of the second embodiment described above, the two end adjacent members 2D include a pair of guide portions 25D, but the present invention is not limited to this configuration. Only one of the two end adjacent members 2D may include a pair of guide portions 25D.

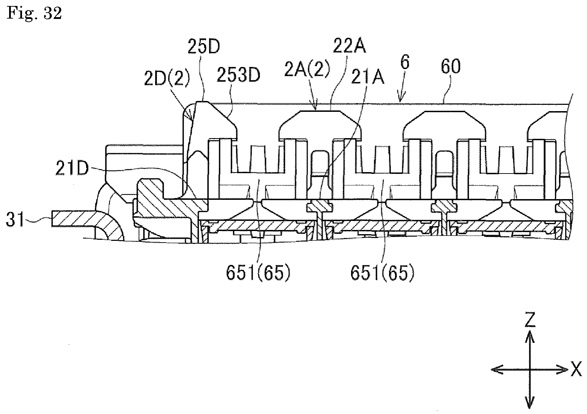

In the energy storage apparatus 1 of the second embodiment described above, the guide portion 25D of the end adjacent member 2D only has a configuration (such as a guide surface 251D) for guiding the duct portion 6 to an arrangement position when the duct portion 6 is attached, and does not have a configuration for fixing the duct portion 6 to the end adjacent member 2D (apparatus main body A), but the present invention is not limited to this configuration. As illustrated in Fig. 32, the guide portion 25D may include a locking portion 253D that protrudes toward the energy storage device 10 in the X-axis direction from a position spaced a predetermined interval (an interval to an end portion on one side of the locked portion 65 and the like in the Z-axis direction) from the end main body portion 21D on one side in the Z-axis direction. That is, the guide portion 25D may have a configuration for fixing (locking or the like) the duct portion 6 at the arrangement position.

In the first and second embodiments described above, the energy storage device is used as a chargeable and dischargeable nonaqueous electrolyte secondary battery (lithium ion secondary battery), but the type and size (capacity) of the energy storage device are arbitrary. In the above embodiment, a lithium ion secondary battery has been described as an example of the energy storage device, but the present invention is not limited thereto. The present invention is also applicable to various secondary batteries, as well as other energy storage devices such as primary batteries and capacitors, such as electric double layer capacitors.

In order to express the present invention, the present invention has been properly and fully described above through the first and second embodiments with reference to the drawings, but it should be recognized that those skilled in the art can easily modify and/or improve the above-mentioned embodiments. Therefore, unless any modifications or improvements implemented by those skilled in the art are at a level that causes a departure from the scope of the claims described in the claims, such modifications or improvements are interpreted as being included within the scope of the claims.

### DESCRIPTION OF REFERENCE SIGNS

1: Energy storage apparatus
2: Adjacent member
2A: First intermediate adjacent member (second adjacent member)
21A: First intermediate main body portion (second main body portion)
22A: First intermediate locking piece
221A: Locking piece main body
222A: Locking portion
23A: First intermediate restricting portion
27A: First intermediate locking portion
271A: Hook portion
28A: Positioning protrusion
2B: Second intermediate adjacent member (second adjacent member)
21B: Second intermediate main body portion (second main body portion)
211B: Protruding strip
212B: Facing surface
22B: Second intermediate locking piece
221B: Locking piece main body
222B: Locking portion
23B: Second intermediate restricting portion
24B: Second fixing portion
27B: Second intermediate locking portion
271B: Hook portion
2C: End adjacent member (end member)
21C: End main body portion
211C: Protruding strip
212C: Facing surface
23C: End restricting portion
25C: Guide portion
251C: Guide surface
252C: Leading surface
26C: Engaged portion
26C1: First engaged portion (engaged portion)
26C2: Second engaged portion (engaged portion)
260: Recess
260A: Engaged through hole
261: Bottom surface portion
262: Restricting surface portion
263: Side surface portion
264: Closing surface portion
265: Restricting portion (first portion)
266: Reinforcing portion (second portion)
2D: End adjacent member (first adjacent member)
21D: End main body portion (first main body portion)
211D: Protruding strip
212D: Facing surface
23D: End restricting portion
25D: Guide portion
251D: Guide surface
252D: Leading surface
253D: Locking portion
3: Holding portion
31: Terminal portion (end member)
311: Terminal end main body
312: Through hole
313: Flange portion
32: Extension portion
320: Extension portion main body
3201: Ventilation opening
3202: First fixing hole
321: First piece portion
322: Second piece portion
323: Third piece portion
3231: Second fixing hole
33: Connecting portion
331: Bolt
332: Nut
4: First fixing portion
5: Insulator
51: Ventilation area
6, 6B: Duct portion
60: Duct portion main body
60a: One end
60b: Other end portion
601: First member
602: Second member
61: Bottom wall portion
611: Duct portion through hole
62: Side wall portion
63: Top wall portion
65: Locked portion
65a: Locked portion closest to joint portion
65t: Abutment portion
651: First locked portion
652: Second locked portion
66: Joint portion
67: Engaging portion
67a: Curved surface
671: First engaging portion (engaging portion)
672: Second engaging portion (engaging portion)
7: Seal portion
71: Seal portion through hole
8: Plate portion main body
81: Bus bar accommodating portion
82: Electric wire arrangement portion
83: Lid portion
84: Connecting portion
85: Duct arrangement portion
9: Harness
91: Cable portion
92: Connector
10: Energy storage device
11: Case
12: Case body
121: Closing portion
122: Body portion
123: Long wall portion
124: Short wall portion
13: Lid plate
131: Lid plate main body
132: Gas release valve
14: Terminal
500: Battery assembly
501: Battery
502: Electrode surface
503: Positive pole
504: Negative pole
505a: Bus bar module
506: Duct
506a: Main body portion
506b: Flange portion
506c: Outlet
507: Bus bar
508: Resin plate
700: Battery pack
701: Module case
702: Battery module
703: Bus bar
704: Bus bar case
706: Duct portion
720: Battery cell
721: Exterior case
721a: End surface
722a, 722b: Electrode terminal
723: Safety valve
A: Apparatus main body
B: Bus bar
C: Plate portion
C1: First center line
C2: Second center line
C3: Central axis of duct
D: Layered product
R: Flow path
S: Guide space
S1: Flue gas passage
α: Inclination direction about central axis

## Claims

1. An energy storage apparatus comprising:
a plurality of energy storage devices arranged in a first direction, the plurality of energy storage devices each including a gas release valve disposed facing a second direction perpendicular to the first direction;
a pair of end members disposed on both sides of the plurality of energy storage devices in the first direction; and
a duct portion that overlaps the gas release valve in the second direction, wherein
the duct portion includes:
a duct portion main body that extends in the first direction and guides gas discharged from the gas release valve in the first direction;
a joint portion that is disposed at one end of the duct portion main body in the first direction and to which an other member is connected and capable of releasing the gas guided to the one end to the other member; and
an engaging portion that is disposed at the one end of the duct portion main body and engages with an end member of the pair of end members on one side in the first direction.

2. The energy storage apparatus according to claim 1, wherein
the end member on the one side includes an engaged portion that engages with the engaging portion at an end portion in a direction toward the gas release valve in the second direction,
the engaging portion extends from the one end of the duct portion main body in the first direction, and
the engaged portion includes:
a first portion that faces the engaging portion from an opposite side with respect to the plurality of energy storage devices in the second direction and extends in a planar direction perpendicular to the second direction; and
a second portion that protrudes from an edge of the first portion in a direction away from the plurality of energy storage devices in the second direction and extends along the edge of the first portion.

3. An energy storage apparatus comprising:
a plurality of energy storage devices arranged in a first direction, the plurality of energy storage devices each including a gas release valve disposed facing a second direction perpendicular to the first direction;
a plurality of adjacent members disposed between adjacent energy storage devices in the first direction, or disposed adjacent to an endmost energy storage device among the plurality of energy storage devices in the first direction on an outer side of the endmost energy storage device; and
a duct portion that overlaps the gas release valve in the second direction, wherein
a first adjacent member which is at least one adjacent member among the plurality of adjacent members includes:
a first main body portion that overlaps at least of an energy storage device of the adjacent energy storage devices or the endmost energy storage device when viewed in the first direction; and
a pair of guide portions that extends from the first main body portion in the second direction, the pair of guide portions extending along the duct portion on both sides of the duct portion in a third direction perpendicular to each of the first direction and the second direction.

4. An energy storage apparatus comprising:
a plurality of energy storage devices arranged in a first direction, the plurality of energy storage devices each including a gas release valve disposed facing a second direction perpendicular to the first direction;
a plurality of adjacent members disposed between adjacent energy storage devices in the first direction, or disposed adjacent to an endmost energy storage device among the plurality of energy storage devices in the first direction on an outer side of the endmost energy storage device; and
a duct portion that overlaps the gas release valve in the second direction, wherein
a first adjacent member which is at least one adjacent member among the plurality of adjacent members includes:
a first main body portion that overlaps at least of an energy storage device of the adjacent energy storage devices or the endmost energy storage device when viewed in the first direction; and
a pair of guide portions that extends from the first main body portion in the second direction, the pair of guide portions extending along the duct portion on both sides of the duct portion in a third direction perpendicular to each of the first direction and the second direction,
a second adjacent member which is different from the first adjacent member among the plurality of adjacent members includes:
a second main body portion that overlaps at least of an energy storage device of the adjacent energy storage devices or the endmost energy storage device when viewed in the first direction; and
a locking piece that extends from the second main body portion, the locking piece extending in the same direction as the pair of guide portions at a position adjacent to the duct portion in the third direction and locking the duct portion, and
the pair of guide portions are longer in the second direction than the locking piece of the second adjacent member.

5. The energy storage apparatus according to claim 4, wherein a bending rigidity of the guide portion is greater than a bending rigidity of the locking piece.

6. The energy storage apparatus according to claim 4 or 5, wherein the first adjacent member is disposed outside the endmost energy storage device among the plurality of energy storage devices in the first direction.

7. The energy storage apparatus according to claim 1, wherein
the duct portion includes:
a first member on a side of the plurality of energy storage devices in the second direction; and
a second member on an opposite side with regard to the plurality of energy storage devices in the second direction,
the first member includes a first engaging portion disposed at the one end of the duct portion in the first direction, and
the end member of the pair of end members that engages with the first engaging portion includes a first engaged portion that engages with the first member engaging portion.

8. The energy storage apparatus according to claim 1, wherein
the duct portion includes:
a first member on a side of the plurality of energy storage devices in the second direction; and
a second member on an opposite side with regard to the plurality of energy storage devices in the second direction,
the second member includes a second engaging portion disposed at the one end of the duct portion in the first direction, and
the end member of the pair of end members that engages with the second engaging portion includes a second engaged portion that engages with the second member engaging portion.

9. The energy storage apparatus according to claim 1, wherein
the duct portion includes:
a first member on a side of the plurality of energy storage devices in the second direction; and
a second member on an opposite side with regard to the plurality of energy storage devices in the second direction,
the first member includes a first engaging portion disposed at the one end of the duct portion in the first direction,
the second member includes a second engaging portion disposed at the one end of the duct portion in the first direction, and
the end member of the pair of end members that engages with the first engaging portion and the second engaging portion includes:
a first engaged portion that engages with the first engaging portion; and
a second engaged portion that engages with the second engaging portion.
